(19) Europäisches Patentamt
European Patent Office
Office européen des brevets

(11) EP 2 497 085 B1

(12) EUROPÄISCHE PATENTSCHRIFT

(45) Veröffentlichungstag und Bekanntmachung des Hinweises auf die Patenterteilung:
**12.02.2014 Patentblatt 2014/07**

(21) Anmeldenummer: **10778940.6**

(22) Anmeldetag: **02.11.2010**

(51) Int Cl.:
***G11B 7/245*** *(2006.01)* ***G11B 7/24*** *(2013.01)*

(86) Internationale Anmeldenummer:
**PCT/EP2010/066630**

(87) Internationale Veröffentlichungsnummer:
**WO 2011/067057 (09.06.2011 Gazette 2011/23)**

# (54) VERFAHREN ZUR HERSTELLUNG EINES HOLOGRAPHISCHEN FILMS

Method for producing a holographic film

Procédé de fabrication d’un film holographique

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.11.2009 EP 09013766**

(43) Veröffentlichungstag der Anmeldung:
**12.09.2012 Patentblatt 2012/37**

(73) Patentinhaber: **Bayer Intellectual Property GmbH**
**40789 Monheim (DE)**

(72) Erfinder:
- **HÖNEL, Dennis**
  **53909 Zülpich-Wichterich (DE)**
- **WEISER, Marc-Stephan**
  **51379 Leverkusen (DE)**
- **BRUDER, Friedrich-Karl**
  **47802 Krefeld (DE)**
- **RÖLLE, Thomas**
  **51381 Leverkusen (DE)**
- **FÄCKE, Thomas**
  **51375 Leverkusen (DE)**

(74) Vertreter: **BIP Patents**
**c/o Bayer Intellectual Property GmbH**
**Creative Campus Monheim**
**Alfred-Nobel-Straße 10**
**40789 Monheim (DE)**

(56) Entgegenhaltungen:
**WO-A-03/014178 WO-A-2008/125199**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 497 085 B1

**Beschreibung**

Die Erfindung betrifft ein Verfahren zur Herstellung eines holographischen Films sowie einen nach dem Verfahren erhältlichen holographischen Film.

Holographische Filme können beispielsweise mit Hilfe von speziellen Photopolymer-Formulierungen hergestellt werden. So ist etwa in der WO 2008/125199 A1 eine Photopolymer-Formulierung beschrieben, die Polyurethan-basierte Matrixpolymere, ein Schreibmonomer auf Acrylatbasis sowie Photoinitiatoren enthält. Härtet man eine Schicht aus der Photopolymer-Fonnulierung aus, sind in der dabei gebildeten Polyurethanmatrix das Schreibmonomer und die Photoinitiatoren räumlich isotrop verteilt eingebettet. Auf diese weise erhält man einen Film, in das Hologramme einbelichtet werden können.

Dies kann mittels der Überlagerung zweier kohärenter Lichtquellen erfolgen, wobei sich eine dreidimensionale Struktur in dem Medium ausbildet, die sich im allgemeinen durch eine regionale Änderung des Brechungsindexes (Brechungsindexmodulation $\Delta n$) beschreiben lässt. Derartige Strukturen werden Hologramme genannt, die auch als diffraktive optische Elemente beschrieben werden können. Dabei hängt es von der speziellen Belichtung ab, welche optischen Funktionen ein solches Hologramm ausbildet.

Für die Verwendungen von Photopolymer-Formulierungen spielt die durch die holographische Belichtung im Photopolymer erzeugte Brechungsindexmodulation $\Delta n$ die entscheidende Rolle. Bei der holographischen Belichtung wird das Interferenzfeld aus Signal- und Referenzlichtstrahl (im einfachsten Fall das zweier ebenen Wellen) durch die lokale Photopolymerisation von z.B. hochbrechenden Acrylate an Orten hoher Intensität im Interferenzfeld in ein Brechungsindexgitter abgebildet. Das Brechungsindexgitter im Photopolymeren (das Hologramm) enthält alle Information des Signallichtstrahls. Durch Beleuchtung des Hologramms nur mit dem Referenzlichtstrahl kann dann das Signal wieder rekonstruiert werden. Die Stärke des so rekonstruierten Signals im Verhältnis zur Stärke des eingestrahlten Referenzlichts wird Beugungseffizienz genannt, im folgenden DE wie Diffraction Efficiency. Im einfachsten Fall eines Hologramms, das aus der Überlagerung zweier ebener Wellen entsteht ergibt sich die DE aus dem Quotienten der Intensität des bei der Rekonstruktion abgebeugten Lichtes und der Summe der Intensitäten aus eingestrahltem Referenzlicht und abgebeugtem Licht. Je höher die DE desto effizienter ist ein Hologramm in Bezug auf die Lichtmenge des Referenzlichtes die notwendig ist, uin das Signal mit einer festen Helligkeit sichtbar zu machen.

Hochbrechende Acrylate sind in der Lage, Brechungsindexgitter mit hoher Amplitude zwischen Bereichen mit niedrigem Brechungsindex und Bereichen mit hohem Brechungsindex zu erzeugen und damit in Photopolymer-Formulierungen Hologramme mit hohem DE und hohem An zu esmöglichen. Dabei ist zu beachten, dass DE vom Produkt aus $\Delta n$ und der Photopolymerschichtdicke d abhängt. Je größer das Produkt desto größer die mögliche DE (für Reflexionshologramme). Die Breite des Winkelbereiches bei dem das Hologramm z.B. bei monochromatischer Beleuchtung sichtbar wird (rekonstruiert) hängt nur von der Schichtdicke d ab. Bei Beleuchtung des Hologramms mit z.B. weißem Licht hängt die Breite des spektralen Bereiches der zur Rekonstruktion des Hologramms beitragen kann ebenfalls nur von der Schichtdicke d ab. Dabei gilt je kleiner d desto größer die jeweiligen Akzeptanzbreiten.

Will man helle und leicht sichtbare Hologramme herstellen, ist ein hohes $\Delta n$ und eine geringe Dicke d anzustreben und zwar so das DE möglichst groß wird. Das heißt je höher $\Delta n$ wird, desto mehr Freiraum zur Gestaltung der Schichtdicke d für helle Hologramme erreicht man ohne Verlust an DE. Daher kommt der Optimierung von $\Delta n$ bei der Optimierung von Photopolymerformulierungen eine herausragenden Bedeutung zu (P. Haribaran, Optical Holography, 2nd Edition, Cambridge University Press, 1996).

Es ist daher bisher versucht worden, durch Veränderung der Zusammensetzung der zur Herstellung der holographischen Filme verwendeten Photopolymer-Formulierungen ein möglichst hohes $\Delta n$ zu realisieren. Allerdings hat sich gezeigt, dass die im Laborversuch entwickelten Photopolymer-Formulierungen nicht ohne teils erhebliche Probleme für die großtechnische Herstellung von holographischen Filmen eingesetzt werden können.

Ein derartiges großtechnisches Herstellungsverfahren ist beispielsweise in der noch nicht offengelegten europäischen Patentanmeldung mit der Amneldenummer 09001952.2 beschrieben. Bei diesem Verfahren wird eine Photopolymer-Formulierung auf ein Trägermaterial aufgebracht und anschließend bei erhöhter Temperatur getrocknet. Auf diese Weise können holographische Medien in Form von Filmen erhalten werden.

WO03/014178 offenbart ein Verfahren zur Herstellung von holographischen Mediem, bei denen eine Photopolymerformulierung umfassend Polyurethan-Matrixpolymere, Acrylat-Schreibmonomere und Photoinitiatorsysteme flächig als Schciht auf eine Trägerfolie aufgebracht wird.

Wenn die im Laborversuch für ein hohes $\Delta n$ optimierten Photopolymer-Formulierungen bei dem vorstehend beschriebenen Verfahren eingesetzt werden, erhält man einerseits in vielen Fällen Filme, die keine ausreichende mechanische Stabilität aufweisen, so dass es zur Verquetschung der applizierten Photopolymer-Formulierung während der Aufwicklung auf eine Rolle kommt. Dies ist insbesondere nachteilig, da die Filme nicht zerstörungsfrei als Rollen aufgewickelt werden können.

Auf der anderen Seite konnten zwar Filme hergestellt werden, die eine ausreichende mechanische Stabilität aufwiesen. Allerdings wiesen Hologramme, die in diese Filme geschrieben wurden, nicht die gewünschten hohen $\Delta n$

Werte auf.

Es ist somit bisher nicht ohne weiteres möglich, im großtechnischen Maßstab holgraphische Filme herzustellen, die sowohl die notwendige mechanische Stabilität und Belastbarkeit aufweisen als auch zum Schreiben von Hologrammen mit hohen Δn Werten geeignet sind.

Aufgabe der vorliegenden Erfindung war daher ein (großtechnisches) Verfahren anzugeben, mit dessen Hilfe holographische Filme hergestellt werden können, die sowohl die notwendige mechanische Stabilität und Belastbarkeit aufweisen als auch zum Schreiben von Hologrammen mit hohen Δn Werten geeignet sind.

Diese Aufgabe ist durch ein Verfahren zur Herstellung eines holographischen Films gelöst, bei dem

i) eine Photopolymer-Formulierung umfassend als Komponenten

A) Matrixpolymere

B) Schreibmonomere

C) Photoinitiatorsystem

D) optional eine nicht photopolymerisierbare Komponente

E) und gegebenenfalls Katalysatoren, Radikalstabilisatoren, Lösungsmittel, Additive sowie andere Hilfs- und / oder Zusatzstoffe

bereit gestellt,

ii) die Photopolymer-Formulierung flächig als Film auf ein Substrat aufgebracht und

iii) die Photopolymer-Formulierung auf dem Substrat bei einer Temperatur 60 < T < 120 °C getrocknet wird,

wobei als Komponenten für die Photopolymer-Formulierung nur Verbindungen ausgewählt werden, deren TGA 95 Werte > 100°C sind und mindestens 30 °C über der Temperatur T liegen und eine Photopolymer-Formulierung mit einen Plateaumodul von ≥ 30.000 Pa verwendet wird.

Unter Plateaumodul im Sinne der vorliegenden Anmeldung wird der Realteil des komplexen Schermoduls (auch Speichermodul genannt) der nicht belichteten Photopolymer-Formulierung verstanden.

Der Plateaumodul der Photopolymer-Formulierung kann insbesondere bestimmt werden, indem man den komplexen Schermodul der Photopolymerformulierung in einem Oszillationsrheometer in Platte-Platte Geometrie vermisst. Insbesondere wenn die Matrixkomponente A aus reaktiven Komponenten (z. B. einem 2K-System) besteht, kann damit die zeitliche Entwicklung des Schermoduls der Photopolylmerformulierung über der Zeit der Aushärtung der Matrixkomponente verfolgt werden, an deren Ende sich der Plateaumodul als Realteil des sich einstellenden komplexen Schermoduls ergibt. Aus Gründen der einfacheren Durchführung der Messung des Plateaumoduls kann dabei auf das Photoinitiatorsystem (Komponente C)) in der Photopolymerformulierung verzichtet werden.

Vorzugsweise kann die die Photopolymer-Formulierung bei einer Temperatur 70 < T < 100 °C getrocknet werden.

Die TGA 95 Werte der einzelnen Komponenten können insbesondere bestimmt werden, indem eine Menge der Probe der jeweiligen Komponente von ca. 10 mg in ein Aluminiumpfännchen mit einem Volumen von 70 μl eingewogen, das Aluminiumpfännchen einen Ofen einer Thermowaage, bevorzugt einer Thermowaage TG50 der Firma Mettler-Toledo, eingebracht und bei einer konstanten Aufheizrate des Ofens von 20 K/min der Massenverlust der Probe im offenen Aluminiumpfännchen gemessen wird, wobei die Starttemperatur 30 °C und die Endtemperatur 600 °C des Ofens betragen, der Ofen während der Bestimmung mit einem Stickstoffstrom einer Stärke von 200 ml/min durchgespült und als TGA 95 Wert der jeweiligen Komponente die Temperatur ermittelt wird, bei der ein Massenverlust der Probe von 5 Gew.-%, bezogen auf die ursprünglich eingewogene Menge der Probe, eingetreten ist.

Vorzugsweise kann eine Photopolymer-Formulierung mit einem Plateaumodul von ≥ 0,03 MPa und ≥ 1 MPa, bevorzugt von ≥ 0,05 MPa und ≤ 1 MPa, besonders bevorzugt von ≥ 0,1 MPa und ≤ 1 MPa und insbesondere bevorzugt von ≥ 0,1 MPa und ≤ 0,6 MPa verwendet werden.

Gemäß einer weiteren bevorzugten Ausführungsform der Erfindung ist vorgesehen, dass nach dem Trocknen im Schritt iii) auf den Film eine Kaschierfolie aufgebracht wird. Anschließend kann der Film vorzugsweise zusammen mit der Kaschierfolie aufgerollt werden.

Bei den Matrixpolymeren kann es sich vorzugsweise um Polyurethane handeln, die insbesondere durch Umsetzung von einer Isocyanatkomponente a) mit einer Isocyanat-reaktiven Komponente b) erhältlich sind.

Bevorzugt sind weiterhin Photopolymer-Formulierungen, umfassend Matrixpolymere, erhältlich durch Umsetzung von einer Polyisocyanatkomponente a) mit einer isocyanatreaktiven Komponente b), mindestens 2 verschiedene Verbindungen, die unter Einwirkung aktinischer Strahlung mit ethylenisch ungesättigten Verbindungen unter Polymerisation reagierende Gruppen (strahlenhärtende Gruppen) aufweisen und selbst frei von NCO-Gruppen sind als Schreibmonomere B), Photoinitiatoren C), Radikalstabilisatoren E), gegebenenfalls Katalysatoren E) und gegebenenfalls Hilfs- und Zusatzstoffe E).

Die Isocyanatkomponente a) umfasst bevorzugt Polyisocyanate. Als Polyisocyanate können alle dem Fachmann an sich bekannten Verbindungen oder deren Mischungen eingesetzt werden, die im Mittel zwei oder mehr NCO-Funktionen pro Molekül aufweisen. Diese können auf aromatischer, araliphatischer, aliphatischer oder cycloaliphatischer Basis sein. In untergeordneten Mengen können auch Monoisocyanate und/oder ungesättigte Gruppen enthaltende Polyisocyanate mitverwendet werden.

Beispielsweise geeignet sind Butylendiisocyanat, Hexamethylendiisocyanat (HDI), Isophorondiisocyanat (IPDI), 1,8-Diisocyanato-4-(isocyanatomethyl)-octan, 2,2,4- und/oder 2,4,4-Trimethylhexamethylendiisocyanat, die isomeren Bis-(4,4'-isocyanatocyclohexyl)methan und deren Mischungen beliebigen Isomerengehalts, Isocyanatomethyl-1,8-octandiisocyanat, 1,4-Cyclohexylendiisocyanat, die isomeren Cyclohexandimethylendiisocyanale, 1,4-Phenylendiisocyanat, 2,4- und/oder 2,6-Toluylendiisocyanat, 1,5-Naphthylendiisocyanat, 2,4'- oder 4,4'-Di-phenylmethandiisocyanat und/oder Triphenylmethan-4,4',4"-triisocyanat.

Ebenfalls möglich ist der Einsatz von Derivaten monomerer Di- oder Triisocyanate mit Urethan-, Harnstoff-, Carbodiimid-, Acylharnstoff-, Isocyanurat-, Allophanat-, Biuret-, Oxadiazintrion-, Uretdion- und/oder Iminooxadiazindionstrukturen.

Bevorzugt ist der Einsatz von Polyisocyanaten auf Basis aliphatischer und/oder cycloaliphatischer Di- oder Triisocyanate.

Besonders bevorzugt handelt es sich bei den Polyisocyanaten der Komponente a) um di- oder oligomerisierte aliphatische und/oder cycloaliphatische Di- oder Triisocyanate.

Ganz besonders bevorzugt sind Isocyanurate, Uretdione und/oder Iminooxadiazindione basierend auf HDI sowie 1,8-Diisocyanato-4-(isocyanatomethyl)-octan oder deren Mischungen.

Ebenfalls können als Komponente a) NCO-funktionelle Prepolymere mit Urethan-, Allophanat-, Biuret- und/oder Amidgruppen eingesetzt werden. Prepolymere der Komponente a) werden in dem Fachmann an sich gut bekannter Art und Weise durch Umsetzung von monomeren, oligomeren oder Polyisocyanaten a1) mit isocyanatreaktiven Verbindungen a2) in geeigneter Stöchiometrie unter optionalem Einsatz von Katalysatoren und Lösemitteln erhalten.

Als Polyisocyanate a1) eignen sich alle dem Fachmann an sich bekannten aliphatischen, cycloaliphatischen, aromatischen oder araliphatischen Di- und Triisocyanate, wobei es unerheblich ist, ob diese mittels Phosgenierung oder nach phosgenfreien Verfahren erhalten wurden. Daneben können auch die diem Fachmann an sich gut bekannten höhermolekularen Folgeprodukte monomerer Di- und/oder Triisocyanate mit Urethan-, Harnstoff-, Carbodiimid-, Acylharnstoff-, Isocyanurat-, Allophanat-, Biuret-, Oxadiazintrion-, Uretdion-, Iminooxadiazindionstruktur jeweils einzeln oder in beliebigen Mischungen untereinander eingesetzt werden.

Beispiele für geeignete monomere Di- oder Triisocyanate, die als Komponente a1) eingesetzt werden können, sind Butylendiisocyanat, Hexamethylendiisocyanat (HDI), Isophorondiisocyanat (IPDI), Trimethyl-hexamethylen-diisocyanat (TMDI), 1,8-Diisocyanato-4-(isocyanatomethyl)-octan, Isocyanatoinethyl-1,8-octandiisocyanat (TIN), 2,4- und/oder 2,6-Toluen-diisocyanat.

Als isocyanatreaktive Verbindungen a2) zum Aufbau der Prepolymere werden bevorzugt OH-funktionelle Verbindungen eingesetzt. Diese sind analog den OH-funktionellen Verbindungen wie sie nachfolgend für die Komponente b) beschrieben sind.

Bevorzugte OH-funktionelle Verbindungen in a2) sind Polyester- und/oder Polyetherpolyole mit zahlenmittleren Molmassen von 200 bis 6200 g/Mol. Besonders bevorzugt sind difunktionelle Polyetherpolyole basierend auf Ethylenglykol und Propylenglykol, wobei der Propylenglykolanteil mindestens 40 Gew.-% ausmacht, sowie Polymere des Tetrahydrofurans mit zahlenmittleren Molmassen von 200 bis 4100 g/Mol sowie aliphatische Polyesterpolyole mit zahlenmittleren Molmassen von 200 bis 3100 g/Mol.

Ganz besonders bevorzugt sind difunktionelle Polyetherpolyole basierend auf Ethylenglykol und Propylenglykol, wobei der Propylenglykolanteil mindestens 80 Gew.-% ausmacht (insbesondere reine Polypropylenglykole), sowie Polymere des Tetrahydrofurans mit zahlenmittleren Molmassen von 200 bis 2100 g/Mol. Ganz besonders bevorzugt sind ebenso Additionsprodukte von Butyrolacton, ε-Caprolacton und/oder Methyl-ε-caprolacton (insbesondere ε-Caprolacton) an 2 bis 20 Kohlenstoffatome enthaltende aliphatische, araliphatische oder cycloaliphatische di-, tri- oder polyfunktionelle Alkohole (insbesondere an difunktionelle aliphatische Alkohole mit 3 bis 12 Kohlenstoffatomen). Diese Additionsprodukte haben bevorzugt zahlenmittlere Molmassen von 200 bis 2000 g/Mol, besonders bevorzugt von 500 bis 1400 g/Mol.

Allophanate können auch im Gemisch mit anderen Prepolymeren oder Oligomeren der Komponente a1) eingesetzt werden. In diesen Fällen ist der Einsatz von OH-funktionellen Verbindungen mit Funktionalitäten von 1 bis 3,1 vorteilhaft. Beim Einsatz monofunktioneller Alkohole sind solche mit 3 bis 20 Kohlenstoffatomen bevorzugt.

Ebenfalls möglich ist der Einsatz von Aminen zur Prepolymerherstellung. Beispielsweise geeignet sind Ethylendiamin, Diethylentriamin, Triethylentetramin, Propylendiamin, Diaminocyclohexan, Diaminobenzol, Diaminobisphenyl, difunktionelle Polyamine wie z.B. die Jeff-amine®, aminterminierte Polymere mit zahlenmittleren Molmassen bis 10000 g/Mol oder deren beliebige Gemische untereinander.

Zur Herstellung von biuretgruppenhaltigen Prepolymeren wird Isocyanat im Überschuss mit Amin umgesetzt, wobei eine Biuretgruppe entsteht. Als Amine eignen sich in diesem Falle für die Umsetzung mit den erwähnten Di-, Tri- und Polyisocyanaten alle oligomeren oder polymeren, primären oder sekundären, difunktionellen Amine der vorstehend genannten Art. Bevorzugt sind aliphatische Biurete auf Basis aliphatischer Amine und aliphatischer Isocyanate. Besonders bevorzugt sind niedermolekulare Biurete mit zahlenmittleren Molmassen kleiner 2000 g/Mol basierend auf aliphatischer Diaminen oder difunktionellen Polyaminen und aliphatischen Diisocyanaten, insbesondere HDI und TMDI.

Bevorzugte Prepolymere sind Urethane, Allophanate oder Biurete aus aliphatischen Isocyanatfunktionellen Verbindungen und oligomeren oder polymeren Isocyanat-reaktiven Verbindungen mit zahlenmittleren Molmassen von 200 bis 10000 g/Mol, besonders bevorzugt sind U-rethane, Allophanate oder Biurete aus aliphatischen Isocyanat-funktionellen Verbindungen und Polyolen mit zahlenmittleren Molmassen von 200 bis 6200 g/Mol oder (Poly-)Aminen mit zahlenmittleren Molmassen kleiner 3000 g/Mol und ganz besonders bevorzugt sind Allophanate aus HDI oder TMDI und difunktionellen Polyetherpolyolen (insbesondere Polypropylenglykolen) mit zahlenmittleren Molmassen von 200 bis 2100 g/Mol, Urethane aus HDI oder TMDI auf Basis von Additionsprodukten von Butyrolacton, ε-Caprolacton und/oder Methyl-ε-caprolacton (insbesondere ε-Caprolacton) an 2 bis 20 Kohlenstoffatome enthaltende aliphatische, araliphatische oder cycloaliphatische di-, tri- oder polyfunktionelle Alkohole (insbesondere an difunktionelle aliphatische Alkohole mit 3 bis 12 Kohlenstoffatomen) mit zahlenmittleren Molmassen von 500 bis 3000 g/Mol, insbesondere bevorzugt von 1000 bis 2000 g/Mol (insbesondere im Gemisch mit anderen Oligomeren difunktioneller aliphatischer Isocyanate) oder Urethane aus HDI oder TMDI auf Basis trifunktioneller Polyetherpolyole (insbesondere Polypropylenglykol) mit zahlenmittleren Molmassen zwischen 2000 und 6200 g/Mol sowie Biurete aus HDI oder TMDI mit difunktionellen Aminen oder Polyaminen mit zahlenmittleren Molmassen von 200 bis 1400 g/Mol (insbesondere auch im Gemisch mit anderen Oligomeren difunktioneller aliphatischer Isocyanate).

Bevorzugt weisen die vorstehend beschriebenen Prepolymere Restgehalte an freiem monomeren Isocyanat von weniger als 2 Gew.-%, besonders bevorzugt weniger als 1,0 Gew.-%, ganz besonders bevorzugt weniger als 0,5 Gew.-% auf.

Selbstverständlich kann die Isocyanatkomponente anteilsmäßig neben den beschriebenen Prepolymeren weitere Isocyanatkomponenten enthalten. Hierfür kommen in Betracht aromatische, araliphatische, aliphatische und cycloaliphatische Di-, Tri- oder Polyisocyanate verwendet. Es können auch Mischungen solcher Di-, Tri- oder Polyisocyanate eingesetzt werden. Beispiele geeigneter Di-, Tri- oder Polyisocyanate sind Butylendiisocyanat, Hexamethylendiisocyanat (HDI), Isophorondiisocyanat (IPDI), 1,8-Diisocyanato-4-(isocyanatomethyl)octan, 2,2,4- und/oder 2,4,4-Trimethylhexamethylendiisocyanat (TMDI), die isomeren Bis(4,4'-isocyanalocyclohexyl)methane und deren Mischungen beliebigen Isomerengehalts, Isocyanatomethyl-1,8-octandiisocyanat, 1,4-Cyclohexylendiisocyanat, die isomeren Cyclohexandimethylendiisocyanate, 1,4-Phenylendiisocyanat, 2,4- und/oder 2,6-Toluylendiisocyanat, 1,5-Naphthylendiisocyanat, 2,4'- oder 4,4'-Diphenylmethandiisocyanat, Triphenylmethan-4,4',4"-triisocyanat oder deren Derivate mit Urethan-, Harnstoff-, Carbodiimid-, Acylharnstoff-, Isocyanurat-, Allophanat-, Biuret-, Oxadiazintrion-, Uretdion-, Iminooxadiazindionstruktur und Mischungen derselben. Bevorzugt sind Polyisocyanate auf Basis oligomerisierter und/oder derivatisierter Diisocyanate, die durch geeignete Verfahren von überschüssigem Diisocyanat befreit wurden, insbesondere die des Hexamethylendiisocyanat. Besonders bevorzugt sind die oligomeren Isocyanurate, Uretdione und Iminooxadiazindione des HDI sowie deren Mischungen.

Es ist gegebenenfalls auch möglich, dass die Isocyanatkomponente a) anteilsmäßig Isocyanate enthält, die teilweise mit isocyanat-reaktiven ethylenisch ungesättigten Verbindungen umgesetzt sind. Bevorzugt werden hierbei als isocyanat-reaktives ethylenisch ungesättigten Verbindungen α,β-ungesättigte Carbonsäurederivate wie Acrylate, Methacrylate, Maleinate, Fumarate, Maleimide, Acrylamide, sowie Vinylether, Propenylether, Allylether und Dicyclopentadienyl-Einheiten enthaltende Verbindungen, die mindestens eine gegenüber Isocyanaten reaktive Gruppe aufweisen, eingesetzt, besonders bevorzugt sind dies Acrylate und Methacrylate mit mindestens einer isocyanatreaktiven Gruppe. Als hydroxyfunktionelle Acrylate oder Methacrylate kommen beispielsweise Verbindungen wie 2-Hydroxyethyl(meth)acrylat, Polyethylenoxid-mono(meth)acrylate, Polypropylenoxidmono(meth)acrylate, Polyalkylenoxidmono(meth)acrylate, Poly(ε-caprolacton)mono(meth)acrylate, wie z.B. Tone® M 100 (Dow, USA), 2-Hydroxypropyl(meth)acrylat, 4-Hydroxybutyl(meth)acrylat, 3-Hydroxy-2,2-dimethylpropyl(meth)acrylat, die hydroxyfunktionellen Mono-, Di- oder Tetra(meth)acrylate mehrwertiger Alkohole wie Trimethylolpropan, Glycerin, Pentaerythrit, Dipentaerythrit, ethoxyliertes, propoxyliertes oder alkoxyliertes Trimethylolpropan; Glycerin, Pentaerythrit, Dipentaerythrit oder deren technische Gemische in Betracht. Darüberhinaus sind isocyanat-reaktive oligomere oder polymere ungesättigte Acrylat- und/oder Methacrylatgruppen enthaltende Verbindungen alleine oder in Kombination mit den vorgenannten monomeren Verbindungen geeignet. Der Anteil an Isocyanaten die teilweise mit isocyanat-reaktiven ethylenisch ungesättigten Verbindungen umgesetzt sind an der Isocyanatkomponente a) beträgt 0 bis 99 %, bevorzugt 0 bis 50 %, besonders bevorzugt 0 bis 25 %

und ganz besonders bevorzugt 0 bis 15 %.

Es ist gegebenenfalls auch möglich, dass die vorgenannten Isocyanatkomponente a) vollständig oder anteilsmäßig Isocyanate enthält, die ganz oder teilweise mit dem Fachmann aus der Beschichtungstechnologie bekannten Blockierungsmitteln umgesetzt sind. Als Beispiel für Blockierungsmittel seien genannt: Alkohole, Lactame, Oxime, Malonester, Alkylacetoacetate, Triazole, Phenole, Imidazole, Pyrazole sowie Amine, wie z.B. Butanonoxim, Diisopropylamin, 1,2,4-Triazol, Dimethyl-1,2,4-triazol, Imidazol, Malonsäurediethylester, Acetessigester, Acetonoxim, 3,5-Dimethylpyrazol, ε-Caprolactam, N-tert.-Butyl-benzylamin, Cyclopentanoncarboxyethylester oder beliebige Gemische dieser Blockierungsmittel.

Als Komponente b) können an sich alle polyfunktionellen, isocyanatreaktiven Verbindungen eingesetzt werden, die im Mittel wenigstens 1.5 isocyanatreaktive-Gruppen pro Molekül aufweisen.

Isocyanatreaktive Gruppen im Rahmen der vorliegenden Erfindung sind bevorzugt Hydroxy-, Amino- oder Thiogruppen, besonders bevorzugt sind Hydroxyverbindungen.

Geeignete polyfunktionelle, isocyanatreaktive Verbindungen sind beispielsweise Polyester-, Polyether-, Polycarbonat-, Poly(meth)acrylat- und/oder Polyurethanpolyole.

Daneben sind als Bestandteile der Komponente b) als polyfunktionelle, isocyanatreaktive Verbindungen auch niedermolekulare, d.h. mit Molekulargewichten kleiner 500 g/mol, kurzkettige, d.h. 2 bis 20 Kohlenstoffatome enthaltende aliphatische, araliphatische oder cycloaliphatische di, tri oder polyfunktionelle Alkohole geeignet.

Dies können beispielsweise sein Ethylenglykol, Diethylenglykol, Triethylenglykol, Tetraethylenglykol, Dipropylenglykol, Tripropylenglykol, 1,2-Propandiol, 1,3-Propandiol, 1,4-Butandiol, Neopentylglykol, 2-Ethyl-2-butylpropandiol, Trimethylpentandiol, stellungsisomere Diethyloctandiole, 1,3-Butylenglykol, Cyclohexandiol, 1,4-Cyclohexandimethanol, 1,6-Hexandiol, 1,2- und 1,4-Cyclohexandiol, hydriertes Bisphenol A (2,2-Bis(4-hydroxycyclohexyl)propan), 2,2-Dimethyl-3-hydroxypropionsäure (2,2-dimethyl-3-hydroxypropylester). Beispiele geeigneter Triole sind Trimethylolethan, Trimethylolpropan oder Glycerin. Geeignete höherfunktionelle Alkohole sind Ditrimethylolpropan, Pentaerythrit, Dipentaerythrit oder Sorbit.

Als Polyesterpolyole sind beispielsweise lineare Polyesterdiole oder verzweigte Polyesterpolyole geeignet, wie sie in bekannter Weise aus aliphatischen, cycloaliphatischen oder aromatischen Di- bzw. Polycarbonsäuren bzw. ihren Anhydriden mit mehrwertigen Alkoholen einer OH-Funktionalität ≥ 2 erhalten werden.

Beispiele für solche Di- bzw. Polycarbonsäuren bzw. Anhydride sind Bernstein-, Glutar-, Adipin-, Pimelin-, Kork-, Azelain-, Sebacin-, Nonandicarbon-, Decandicarbon-, Terephthal-, Isophthal-, o-Phthal-, Tetrahydrophthal-, Hexahydrophthal- oder Trimellitsäure sowie Säureanhydride wie o-Phthal-, Trimellit- oder Bernsteinsäureanhydrid oder deren beliebige Gemische untereinander.

Beispiele für solche geeigneten Alkohole sind Ethandiol, Di-, Tri-, Tetraethylenglykol, 1,2-Propandiol, Di-, Tri-, Tetrapropylenglykol, 1,3-Propandiol, Butandiol-1,4, Butandiol-1,3, Butandiol-2,3, Pentandiol-1,5, Hexandiol-1,6, 2,2-Dimethyl-1,3-propandiol, 1,4-Dihydroxycyclohexan, 1,4-Dimethylolcyclohexan, Octandiol-1,8, Decandiol-1,10, Dodecandiol-1,12, Trimethylolpropan, Glycerin oder deren beliebige Gemische untereinander.

Bevorzugte Polyesterpolyole basieren auf aliphatischen Alkoholen und Mischungen aus aliphatischen und aromatischen Säuren und haben zahlenmittlere Molmassen zwischen 500 und 10000 g/Mol und Funktionalitäten zwischen 1,8 und 6,1.

Besonders bevorzugte Polyesterpolyole basieren auf aliphatischen Diolen wie Butan-1,4-diol, Hexan-1,6-diol, Neopentylglykol, Ethandiol, Propylenglykol, 1,3-Butylenglykol, Di-, Tri-, Polyethylenglykol, Di-, Tri- und/oder Tetrapropylenglykol oder Mischungen aus vorgenannten Diolen mit aliphatischen höherfunktionellen Alkoholen wie Trimethylolpropan und/oder Pentaerythrit, wobei der Anteil der höherfunktionellen Alkohole bevorzugt kleiner 50 Gewichtsprozent (insbesondere bevorzugt kleiner 30 Gewichtsprozent) bezogen auf die Gesamtmenge des eingesetzten Alkohols ausmacht, in Verbindung mit aliphatischen Di- bzw. Polycarbonsäuren bzw. Anhydriden wie Adipinsäure und/oder Bernsteinsäure oder Mischungen aus vorgenannten aliphatischen Polycarbonsäuren bzw. Anhydriden mit aromatischen Polycarbonsäuren bzw. Anhydriden wie Terephthalsäure und/oder Isophthalsäure wobei der Anteil der aromatischen Polycarbonsäuren bzw. Anhydride bevorzugt kleiner 50 Gewichtsprozent (insbesondere bevorzugt kleiner 30 Gewichtsprozent) bezogen auf die Gesamtmenge der eingesetzten Polycarbonsäuren bzw. Anhydride ausmacht. Besonders bevorzugte Polyesterpolyole haben zahlenmittlere Molmassen zwischen 1000 und 6000 g/Mol und Funktionalitäten zwischen 1,9 und 3,3.

Die Polyesterpolyole können auch auf natürlichen Rohstoffen wie Rizinusöl basieren. Ebenfalls möglich ist, dass die Polyesterpolyole auf Homo- oder Mischpolymerisaten von Lactonen basieren, wie sie bevorzugt durch Anlagerung von Lactonen bzw. Lactongemischen im Rahmen einer ringöffnenden Lacton-Polymerisation wie Butyrolacton, ε-Caprolacton und/oder Methyl-ε-caprolacton an hydroxyfunktionelle Verbindungen wie mehrwertige Alkohole einer OH-Funktionalität ≥ 2 oder Polyole eine Funktionalität von größer 1,8 beispielsweise der vorstehend genannten Art erhalten werden können.

Bevorzugte Polyole, die hier als Starter eingesetzt werden, sind Polyetherpolyole einer Funktionalität von 1,8 bis 3,1 mit zahlenmittleren Molmassen von 200 bis 4000 g/mol, besonders bevorzugt sind Poly(tetrahydrofurane) mit

einer Funktionalität von 1,9 bis 2,2 und zahlenmittleren Molmassen von 500 bis 2000 g/mol (insbesondere 600 bis 1400 g/mol). Als Anlagerungsprodukte sind Butyrolacton, ε-Caprolacton und/oder Methyl-ε-caprolacton, ε-Caprolacton ist besonders bevorzugt.

Solche Polyesterpolyole haben bevorzugt zahlenmittlere Molmassen von 400 bis 6000 g/Mol, besonders bevorzugt von 800 bis 3000 g/Mol. Ihre OH-Funktionalität beträgt bevorzugt 1.8 bis 3.5, besonders bevorzugt 1.9 bis 2.2.

Geeignete Polycarbonatpolyole sind in an sich bekannter Weise durch Umsetzung von organischen Carbonaten oder Phosgen mit Diolen oder Diol-Mischungen zugänglich.

Geeignete organische Carbonate sind Dimethyl-, Diethyl- und Diphenylcarbonat.

Geeignete Diole bzw. Mischungen umfassen die an sich im Rahmen der Polyestersegmente genannten mehrwertigen Alkoholen einer OH-Funktionalität ≥ 2, bevorzugt 1,4-Butandiol, 1,6-Hexandiol und/oder 3-Methylpentandiol, oder auch Polyesterpolyole können zu Polycarbonatpolyolen umgearbeitet werden.

Solche Polycarbonatpolyole haben bevorzugt zahlenmittlere Molmassen von 400 bis 4000 g/Mol, besonders bevorzugt von 500 bis 2000 g/Mol. Die OH-Funktionalität dieser Polyole beträgt bevorzugt 1.8 bis 3.2, besonders bevorzugt 1.9 bis 3.0.

Geeignete Polyetherpolyole sind gegebenenfalls blockweise aufgebaute Polyadditionsprodukte cyclischer Ether an OH- oder NH-funktionelle Startermoleküle.

Geeignete cyclische Ether sind beispielsweise Styroloxide, Ethylenoxid, Propylenoxid, Tetrahydrofuran, Butylenoxid, Epichlorhydrin, sowie ihre beliebigen Mischungen.

Als Starter können die an sich im Rahmen der Polyesterpolyole genannten mehrwertigen Alkohole einer OH-Funktionalität ≥2 sowie primäre oder sekundäre Amine und Aminoalkohole verwendet werden.

Bevorzugte Polyetherpolyole sind solche der vorgenannten Art ausschließlich basierend auf Propylenoxid oder statistische oder Block-Copolymere basierend auf Propylenoxid mit weiteren 1-Alkylenoxiden, wobei der 1-Alykenoxidanteil nicht höher als 80 Gew.-% ist. Besonders bevorzugt sind Propylenoxid-homopolymere sowie statistische oder Block-Copolymere, die Oxyethylen-, Oxypropylen- und/oder Oxybutyleneinheiten aufweisen, wobei der Anteil der Oxypropyleneinheiten bezogen auf die Gesamtmenge aller Oxyethylen-, Oxypropylen- und Oxybutyleneinheiten mindestens 20 Gew.-%, bevorzugt mindestens 45 Gew.-% ausmacht. Oxypropylen- und Oxybutylen- umfasst hierbei alle jeweiligen linearen und verzweigten C3- und C4-Isomere.

Solche Polyetherpolyole haben bevorzugt zahlenmittlere Molmassen von 250 bis 10000 g/Mol, besonders bevorzugt von 500 bis 8500 g/Mol und ganz besonders bevorzugt von 600 bis 4500 g/Mol. Die OH-Funktionalität beträgt bevorzugt 1.5 bis 4.0, besonders bevorzugt 1.8 bis 3.1 und ganz besonders bevorzugt 1.9 bis 2.2.

Als spezielle Polyetherpolyole werden bevorzugt solche eingesetzt, die aus einer isocyanatreaktiven Komponenten umfassend hydroxyfunktionelle Multiblockcopolymere des Typs Y(Xi-H)n mit i = 1 bis 10 und n = 2 bis 8 und zahlenmittleren Molekulargewichten von größer 1500 g/Mol bestehen, wobei die Segmente Xi jeweils aus Oxyalkyleneinheiten der Formel I aufgebaut sind,

-CH2-CH(R)-O-        Formel I

wobei R ein Wasserstoff-, Alkyl-, oder Arylrest, ist, der auch substituiert oder durch Heteroatome (wie Ethersauerstoffe) unterbrochen sein kann, Y der zugrundeliegende Starter ist und der Anteil der Segmente Xi bezogen auf die Gesamtmenge der Segmente Xi und Y wenigstens 50 Gew.-% ausmacht.

Die äußeren Blöcke $X_i$ machen dabei zumindest 50 Gew.-%, bevorzugt 66 Gew.-% der Gesamtmolmasse von $Y(X_i\text{-}H)_n$ aus und bestehen aus Monomereinheiten, die der Formel I gehorchen. Bevorzugt ist n in $Y(X_i\text{-}H)_n$ eine Zahl von 2 bis 6, besonders bevorzugt 2 oder 3 und ganz besonders bevorzugt gleich 2. Bevorzugt ist i in $Y(X_i\text{-}H)_n$ eine Zahl von 1 bis 6, besonders bevorzugt von 1 bis 3 und ganz besonders bevorzugt gleich 1.

In Formel I ist R bevorzugt ein Wasserstoff, eine Methyl-, Butyl-, Hexyl- oder Octylgruppe oder ein ethergruppenhaltiger Alkylrest. Bevorzugte ethergruppenhaltiger Alkylreste sind solche basierend auf Oxyalkyleneinheiten.

Die Multiblockcopolymere $X'(X_i\text{-}H)_n$ haben bevorzugt zahlenmittlere Molekulargewichte von mehr als 1200 g/Mol, besonders bevorzugt mehr als 1950 g/Mol, jedoch bevorzugt nicht mehr als 12000 g/Mol, besonders bevorzugt nicht mehr als 8000 g/Mol.

Die Blöcke $X_i$ können Homopolymere aus ausschließlich gleichen Oxyalkylen-Wiederholungseinheiten sein. Sie können auch statistisch aus verschiedenen Oxyalkyleneinheiten oder ihrerseits blockweise aus verschiedenen Oxyalkyleneinheiten aufgebaut sein.

Bevorzugte basieren die Segmente $X_i$ ausschließlich auf Propylenoxid oder statistischen oder blockweisen Mischungen von Propylenoxid mit weiteren 1-Alkylenoxiden, wobei der Anteil an weiteren 1-Alykenoxiden nicht höher als 80 Gew.-% ist.

Besonders bevorzugt sind als Segmente $X_i$ Propylenoxid-homopolymere sowie statistische oder Block-Copolymere, die Oxyethylen- und/oder Oxypropyleneinheiten, wobei der Anteil der Oxypropyleneinheiten bezogen auf die Gesamtmenge aller Oxyethylen- und Oxypropyleneinheiten mindestens 20 Gew.-%, bevorzugt mindestens 40 Gew.-%

ausmacht.

Die Blöcke $X_i$ werden wie weiter unten beschrieben durch ringöffnende Polymerisation der vorstehend beschriebenen Alkylenoxide auf einen n-fach hydroxy- oder aminofunktionellen Starterblock $Y(H)_n$ aufaddiert.

Der innere Block Y, der zu kleiner 50 Gew.-%, bevorzugt aus kleiner 34 Gew.-% in $Y(Xi\text{-}H)_n$ enthalten ist, besteht aus di- und/oder höher hydroxyfunktionellen Polymerstrukturen auf Basis cyclischer Ether oder ist aufgebaut aus di- und/oder höher hydroxyfunktionellen Polycarbonat-, Polyester-, Poly(meth)acrylat-, Epoxydharz- und/oder Polyurethanstruktureinheiten oder entsprechenden Hybriden.

Geeignete Polyesterpolyole sind lineare Polyesterdiole oder verzweigte Polyesterpolyole, wie sie in bekannter Weise aus aliphatischen, cycloaliphatischen oder aromatischen Di- bzw. Polycarbonsäuren bzw. ihren Anhydriden wie z. B. Bernstein-, Glutar-, Adipin-, Pimelin-, Kork-, Azelain-, Sebacin-, Nonandicarbon-, Decandicarbon-, Terephthal-, Isophthal-, o-Phthal-, Tetrahydrophthal-, Hexahydrophthal- oder Trimellitsäure sowie Säureanhydride wie o-Phthal, Trimellit- oder Bernsteinsäureanhydrid oder deren beliebiger Gemische mit mehrwertigen Alkoholen wie z. B. Ethandiol, Di-, Tri-, Tetraethylenglykol, 1,2-Propandiol, Di-, Tri-, Tetrapropylenglykol, 1,3-Propandiol, Butandiol-1,4, Butandiol-1,3, Butandiol-2,3, Pentandiol-1,5, Hexandiol-1,6, 2,2-Dimethyl-1,3-propandiol, 1,4-Dihydroxycyclohexan, 1,4-Dimethylolcyclohexan, Octandiol-1,8, Decandiol-1,10, Dodecandiol-1,12 oder deren Gemische gegebenenfalls unter Mitverwendung höherfunktioneller Polyole wie Trimethylolpropan oder Glycerin hergestellt werden können. Als mehrwertige Alkohole zur Herstellung der Polyesterpolyole kommen natürlich auch cycloaliphatische und/oder aromatische Di- und Polyhydroxylverbindungen in Frage. Anstelle der freien Polycarbonsäure können auch die entsprechenden Polycarbonsäureanhydride oder entsprechende Polycarbonsäureester von niedrigen Alkoholen oder deren Gemische zur Herstellung der Polyester verwendet werden.

Die Polyesterpolyole können auch auf natürlichen Rohstoffen wie Rizinusöl basieren. Ebenfalls möglich ist, dass die Polyesterpolyole auf Homo- oder Mischpolymerisaten von Lactonen basieren, wie sie bevorzugt durch Anlagerung von Lactonen bzw. Lactongemischen wie Butyrolacton, ε-Caprolacton und/oder Methyl-ε-caprolacton an hydroxyfunktionelle Verbindungen wie mehrwertige Alkohole einer OH-Funktionalität von bevorzugt 2, beispielsweise der vorstehend genannten Art, erhalten werden können.

Solche Polyesterpolyole haben bevorzugt zahlenmittlere Molmassen von 200 bis 2000 g/Mol, besonders bevorzugt von 400 bis 1400 g/Mol.

Geeignete Polycarbonatpolyole sind in an sich bekannter Weise durch Umsetzung von organischen Carbonaten oder Phosgen mit Diolen oder Diol-Mischungen zugänglich.

Geeignete organische Carbonate sind Dimethyl-, Diethyl- und Diphenylcarbonat.

Geeignete Diole bzw. Mischungen umfassen die an sich im Rahmen der Polyesterpolyole genannten mehrwertigen Alkohole einer OH-Funktionalität von 2, bevorzugt 1,4-Butandiol, 1,6-Hexandiol und/oder 3-Methylpentandiol. Polyesterpolyole können auch zu Polycarbonatpolyolen umgearbeitet werden. Besonders bevorzugt werden bei der Umsetzung der genannten Alkohole zu Polycarbonatpolyolen Dimethyl- oder Diethylcarbonat eingesetzt.

Solche Polycarbonatpolyole haben bevorzugt zahlenmittlere Molmassen von 400 bis 2000 g/Mol, besonders bevorzugt von 500 bis 1400 g/Mol und ganz besonders bevorzugt von 650 bis 1000 g/Mol.

Geeignete Polyetherpolyole sind gegebenenfalls blockweise aufgebaute Polyadditionsprodukte cyclischer Ether an OH- oder NH-funktionelle Startennoleküle. Als Polyetherpolyole seien z. B. die Polyadditionsprodukte der Styroloxide, des Ethylenoxid, Propylenoxid, Tetrahydrofuran, Butylenoxid, Epichlorhydrins, sowie ihre Mischadditions- und Pfropfprodukte, sowie die durch Kondensation von mehrwertigen Alkoholen oder Mischungen derselben und die durch Alkoxylierung von mehrwertigen Alkoholen, Aminen und Aminoalkoholen gewonnenen Polyetherpolyole.

Geeignete Polymere cyclischer Ether sind insbesondere Polymere des Tetrahydrofuran.

Als Starter können die an sich im Rahmen der Polyesterpolyole genannten mehrwertigen Alkohole sowie primäre oder sekundäre Amine und Aminoalkohole einer OH- oder NH-Funktionalität von 2 bis 8, bevorzugt 2 bis 6, besonders bevorzugt 2 bis 3, ganz besonders bevorzugt gleich 2 verwendet werden.

Solche Polyetherpolyole haben bevorzugt zahlenmittlere Molmassen von 200 bis 2000 g/Mol, besonders bevorzugt von 400 bis 1400 g/Mol und ganz besonders bevorzugt von 650 bis 1000 g/Mol.

Als für Starter verwendete Polyetherpolyole werden bevorzugt die Polymere des Tetrahydrofuran eingesetzt.

Selbstverständlich können auch Mischungen der oben beschriebenen Komponenten für den inneren Block Y eingesetzt werden.

Bevorzugte Komponenten für den inneren Block Y sind Polymere des Tetrahydrofuran sowie aliphatische Polycarbonatpolyole und Polyesterpolyole sowie Polymere des ε-Caprolacton mit zahlenmittleren Mohnassen kleiner 3100 g/Mol.

Besonders bevorzugte Komponenten für den inneren Block Y sind difunktionelle Polymere des Tetrahydrofuran sowie difunktionelle aliphatische Polycarbonatpolyole und Polyesterpolyole sowie Polymere des ε-Caprolacton mit zahlenmittleren Molmassen kleiner 3100 g/Mol.

Ganz besonders bevorzugt basiert das Startersegment Y auf difunktionellen, aliphatischen Polycarbonatpolyolen, Poly(ε-Caprolacton) oder Polymeren des Tetrahydrofurans mit zahlenmittleren Molmassen größer 500 g/Mol und

kleiner 2100 g/Mol.

Bevorzugt eingesetzte Blockcopolymere der Struktur $Y(X_i\text{-}H)_n$ bestehen zu mehr als 50 Gewichtsprozent aus den oben als beschriebenen Blöcken $X_i$ und haben eine zahlenmittlere Gesamtmolmasse von größer 1200 g/Mol.

Besonders bevorzugte Blockcopolyole bestehen zu weniger als 50 Gewichtsprozent aus aliphatischem Polyester, aliphatischem Polycarbonatpolyol oder Poly-THF und zu mehr als 50 Gewichtsprozent aus den oben als erfindungsgemäß beschriebenen Blöcken $X_i$ und haben eine zahlenmittlere Molmasse von größer 1200 g/Mol. Besonders bevorzugte Blockcopolymere bestehen bestehen zu weniger als 50 Gewichtsprozent aliphatischem Polycarbonatpolyol, Poly(ε-Caprolacton) oder Poly-THF und zu mehr als 50 Gewichtsprozent aus den oben als erfindungsgemäß beschriebenen Blöcken $X_i$ und haben eine zahlenmittlere Molmasse von größer 1200 g/Mol.

Ganz besonders bevorzugte Blockcopolymere bestehen zu weniger als 34 Gewichtsprozent aus aliphatischem Polycarbonatpolyol, Poly(ε-Caprolacton) oder Poly-THF und zu mehr als 66 Gewichtsprozent aus den oben als erfindungsgemäß beschriebenen Blöcken $X_i$ und haben eine zahlenmittlere Molmasse von größer 1950 g/Mol und weniger als 9000 g/Mol.

Die beschriebenen Blockcopolyole werden durch Alkylenoxidadditionsverfahren hergestellt. Von großtechnischer Bedeutung ist zum einen die basisch katalysierte Anlagerung von Alkylenoxiden an Starterverbindungen mit Zerewitinoff-aktiven Wasserstoffatomen $Y(H)_n$, zum anderen die gewinnt die Verwendung von Doppelmetallcyanidverbindungen ("DMC-Katalysatoren") für die Durchführung dieser Reaktion zunehmend an Bedeutung. An N, O oder S gebundener Wasserstoff wird als Zerewitinoff-aktiver Wasserstoff (manchmal auch nur als "aktiven Wasserstoff") bezeichnet, wenn er nach einem von Zerewitinoff aufgefundenen Verfahren durch Umsetzung mit Methylmagnesiumjodid Methan liefert. Typische Beispiele für Verbindungen mit Zerewitinoff-aktivem Wasserstoff sind Verbindungen, die Carboxyl-, Hydroxyl-, Amino-, Imino- oder Thiol-Gruppen als funktionelle Gruppen enthalten. Die basisch katalysierte Anlagerung von Alkylenoxiden wie beispielsweise Ethylenoxid oder Propylenoxid an Starterverbindungen mit Zerewitinoff-aktiven Wasserstoffatomen erfolgt in Gegenwart von Alkalimetallhydroxiden, es können aber auch Alkalimetallhydride, Alkalimetallcarboxylate oder Erdalkalihydroxide verwendet werden. Nach erfolgter Anlagerung der Alkylenoxide müssen die polymerisationsaktiven Zentren an den Polyetherketten deaktiviert werden, beispielsweise durch Neutralisation mit verdünnten Mineralsäuren wie Schwefelsäure oder Phosphorsäure und Abtrennung der entstehenden Salze. Im erfindungsgemäßen Verfahren werden bevorzugt DMC-Katalysatoren verwendet. Besonders bevorzugt eingesetzt werden hochaktive DMC-Katalysatoren, die z.B. beschrieben sind in US-A 5 470 813, EP-A 700 949, EP-A 743 093, EP-A 761 708, WO 97/40086, WO 98/16310 und WO 00/47649. Ein typisches Beispiel sind die in EP-A 700 949 beschriebenen hochaktiven DMC-Katalysatoren, die neben einer Doppelmetallcyanid-Verbindung (z.B. Zinkhexacyanocobaltat(III)) und einem organischen Komplexliganden (z.B. tert.-Butanol) noch einen Polyether mit einem zahlenmittlerem Molekulargewicht größer als 500 g/Mol enthalten. Diese Katalysatoren können aufgrund ihrer hohen Aktivität in solch kleinen Mengen eingesetzt werden, dass eine weitere Aufarbeitung der Polyetherpolyole nicht erforderlich ist. Das Verfahren ist unten ausführlicher beschrieben. Als "Starterpolyol" wird dabei stets die zu weniger als 50 Gewichtsprozent im Blockcopolymer enthaltene OH-funktionalisierte Vorstufe Y eingesetzt, auf die Alkylenoxid aufpolymerisiert wird, so dass am Ende ein Multiblockcopolymer erhalten wird. Als Alkylenoxide kommen bevorzugt Ethylenoxid, Propylenoxid, Butylenoxid sowie deren Mischungen zum Einsatz. Der Aufbau der Polyetherketten durch Alkoxylierung kann z.B. nur mit einem monomeren Epoxid durchgeführt werden oder auch statistisch oder blockweise mit mehreren unterschiedlichen monomeren Epoxiden erfolgen.

Bevorzugte Kombinationen aus Komponente a) und b) bei der Herstellung der Matrixpolymere sind:

A) Additionsprodukte von Butyrolacton, ε-Caprolacton und/oder Methyl-ε-caprolacton an Polyetherpolyolen einer Funktionalität von 1,8 bis 3,1 mit zahlenmittleren Molmassen von 200 bis 4000 g/mol in Verbindung mit Isocyanuraten, Uretdionen, Iminooxadiazindionen und/oder anderen Oligomeren basierend auf HDI. Besonders bevorzugt Additionsprodukte von ε-Caprolacton an Poly(tetrahydrofurane) mit einer Funktionalität von 1,9 bis 2,2 und zahlenmittleron Molmassen von 500 bis 2000 g/mol (insbesondere 600 bis 1400 g/mol), deren zahlenmittlere Gesamtmolmasse von 800 bis 4500 g/Mol, insbesondere von 1000 bis 3000 g/Mol liegt in Verbindung mit Oligomeren, Isocyanuraten und/oder Iminooxadiazindionen basierend auf HDI.

B) Polyesterpolyole basierend auf Butan-1,4-diol, Hexan-1,6-diol, Neopentylglykol, Di-, Tri-, Polyethylenglykol mit zahlenmittlerer Molmasse kleiner 500 g/Mol, Tri- und/oder Tetrapropylenglykol in Verbindung mit aliphatischen Di- bzw. Polycarbonsäuren bzw. Anhydriden wie Adipinsäure und/oder Bernsteinsäure oder Mischungen aus vorgenannten aliphatischen Polycarbonsäuren bzw. Anhydriden mit aromatischen Polycarbonsäuren bzw. Anhydriden wie Terephthalsäure und/oder Isophthalsäure wobei der Anteil der aromatischen Polycarbonsäuren bzw. Anhydride bevorzugt kleiner 30 Gewichtsprozent bezogen auf die Gesamtmenge der eingesetzten Polycarbonsäuren bzw. Anhydride ausmacht, mit zahlenmittleren Molmassen zwischen 1000 und 4000 g/Mol und Funktionalitäten zwischen 1,9 und 3,0 in Verbindung mit Oligomeren, Isocyanuraten und/oder Iminooxadiazindionen basierend auf HDI.

C) Polyetherpolyole mit zahlenmittlere Molmassen von 500 bis 8500 g/Mol und OH-Funktionalitäten von 1,8 bis 3,2, ausschließlich basierend auf Propylenoxid oder statistische oder Block-Copolyole basierend auf Propylenoxid und Ethylenoxid, wobei der Ethylenoxidanteil nicht höher als 60 Gew.-% ist in Verbindung mit Urethanen, Allophanaten oder Biureten aus aliphatischen Isocyanat-funktionellen Verbindungen und oligomeren oder polymeren Isocyanat-reaktiven Verbindungen mit zahlemnittleren Molmassen von 200 bis 6000 g/Mol. Besonders bevorzugt sind Propylenoxid-homopolymere mit zahlenmittlere Molmassen von 1800 bis 4500 g/Mol und OH-Funktionalitäten von 1,9 bis 2,2 in Verbindung mit Allophanaten aus HDI oder TMDI und difunktionellen Polyetherpolyolen (insbesondere Polypropylenglykolen) mit zahlenmittleren Molmassen von 200 bis 2100 g/Mol.

D) Polyetherblock- oder -multiblockcopolymere der Formel II, wobei Y ein rein aliphatisches Polycarbonatpolyol oder ein Polymer des Tetrahydrofurans mit jeweils einer OH-Funktionalität von 1,8 bis 3,1 und einer zahlemnittlere Molmassen von 400 bis 2000 g/Mol ist, n = 2, i = 1 oder 2 und R = Methyl oder H ist, mit einer gesamten zahlenmittleren Molmasse von 1950 bis 9000 g/Mol, bevorzugt von 1950 bis 6000 g/Mol, in Verbindung mit Urethanen, Allophanaten oder Biureten aus aliphatischen Isocyanat-funktionellen Verbindungen und oligomeren oder polymeren Isocyanat-reaktiven Verbindungen mit zahlenmittleren Molmassen von 200 bis 6000 g/Mol oder in Verbindung mit Isocyanuraten, Uretdionen, Iminooxadiazindionen und/oder anderen Oligomeren basierend auf HDI. Besonders bevorzugt sind Polyetherblock- oder -multiblockcopolymere der Formel II, wobei Y ein rein aliphatisches Polycarbonatpolyol auf Basis 1 ,4-Butandiol und/oder 1,6-Hexandiol mit Dimethyl- oder Diethylcarbonat oder ein Polymer des Tetrahydrofurans mit einer OH-Funktionalität von 1,8 bis 2,2 und einer zahlenmittlere Molmassen von 600 bis 1400 g/Mol (insbesondere bis 1000 g/Mol) ist, n = 2, i = 1 oder 2 und R = Methyl oder H ist, wobei der Anteil der Ethylenoxideinheiten an der Gesamtmasse von $X_i$ nicht höher als 60 Gew.-% ist, in Verbindung mit Allophanaten aus HDI oder TMDI und difunktionellen Polyetherpolyolen (insbesondere Polypropylenglykolen) mit zahlenmittleren Molmassen von 200 bis 2100 g/Mol, in Verbindung mit Biureten mit zahlenmittleren Molmassen von 200 bis 1400 g/Mol (insbesondere auch im Gemisch mit anderen Oligomeren difunktioneller aliphatischer Isocyanate) basierend auf aliphatischer Diaminen oder Polyaminen und aliphatischen Diisocyanaten, insbesondere HDI und TMDI, in Verbindung mit Urethanen aus HDI oder TMDI auf Basis von Additionsprodukten von Butyrolacton, ε-Caprolacton und/oder Methyl-ε-caprolacton (insbesondere ε-Caprolacton) an 2 bis 20 Kohlenstoffatome enthaltende aliphatische, araliphatische oder cycloaliphatische di-, tri- oder polyfunktionelle Alkohole (insbesondere an difunktionelle aliphatische Alkohole mit 3 bis 12 Kohlenstoffatomen) mit zahlenmittleren Molmassen von 200 bis 3000 g/Mol, insbesondere bevorzugt von 1000 bis 2000 g/Mol (insbesondere im Gemisch mit anderen Oligomeren difunktioneller aliphatischer Isocyanate) oder in Verbindung mit Isocyanuraten, Iminooxadiazindionen und/oder anderen Oligomeren basierend auf HDI.

Als Komponente B) werden ein oder mehrere verschiedene Verbindungen, die unter Einwirkung aktinischer Strahlung mit ethylenisch ungesättigten Verbindungen unter Polymerisation reagierende Gruppen (strahlenhärtende Gruppen) aufweisen und selbst frei von NCO-Gruppen sind, eingesetzt. Bevorzugt sind die Schreibmonomere Acrylate und / oder Methacrylate.

In Komponente B) können Verbindungen wie α,β-ungesättigte Carbonsäurederivate wie Acrylate, Methacrylate, Maleinate, Fumarate, Maleimide, Acrylamide, weiterhin Vinylether, Propenylether, Allylether und Dicyclopentadienyl-Einheiten enthaltende Verbindungen sowie olefinisch ungesättigte Verbindungen wie z.B. Styrol, α-Methylstyrol, Vinyltoluol, Olefine, wie z.B. 1-Octen und/oder 1-Decen, Vinylestern, (Meth)acrylnitril, (Meth)acrylamid, Methacrylsäure, Acrylsäure eingesetzt werden. Bevorzugt sind Acrylate und Methacrylate.

Als Acrylate bzw. Methacrylate werden allgemein Ester der Acrylsäure bzw. Methacrylsäure bezeichnet. Beispiele verwendbarer Acrylate und Methacrylate sind Methylacrylat, Methylmethacrylat, Ethylacrylat, Ethylmethacrylat, Ethoxyethylacrylat, Ethoxyethylmethacrylat, n-Butylacrylat, n-Butylmethacrylat, tert.-Butylacrylat, tert.-Butylmethacrylat, Hexylacrylat, Hexylmethacrylat, 2-Ethylhexylacrylat, 2-Ethylhexylmethacrylat, Butoxyethylacrylat, Butoxyethylmethacrylat, Laurylacrylat, Laurylmethacrylat, Isobornylacrylat, Isobornylmethacrylat, Phenylacrylat, Phenylmethacrylat, p-Chlorphenylacrylat, p-Chlorphenylmethacrylat, p-Bromphenylacrylat, p-Bromphenyl-methacrylat, 2,4,6-Trichlorphenylacrylat, 2,4,6-Trichlorphenylmethacrylat, 2,4,6-Tribromphenyl-acrylat, 2,4,6-Tribromphenylmethacrylat, Pentachlorphenylacrylat, Pentachlorphenylmethacrylat, Pentabromphenylacrylat, Pentabromphenylmethacrylat, Pentabrombenzylacrylat, Pentabrombenzylmethacrylat, Phenoxyethylacrylat, Phenoxyethylmethacrylat, Phenoxyethoxyethylacrylat, Phenoxyethoxyethylmethacrylat, 2-Naphthylacrylat, 2-Naphthyhnethacrylat, 1,4-Bis-(2-thionaphthyl)-2-butylacrylat, 1,4-Bis-(2-thionaphthyl)-2-butylmethacrylat, Propan-2,2-diylbis[(2,6-dibrom-4,1-phenylen)oxy(2-{[3,3,3-tris(4-chlorphenyl)-propanoyl]-oxy}propan-3,1-diyl)oxyethan-2,1-diyl]-diacrylat, Bisphenol A Diacrylat, Bisphenol A Dimethacrylat, Tetrabromobisphenol A Diacrylat, Tetrabromobisphenol A Dimethacrylat sowie deren ethoxylierte Analogverbindungen, N-Carbazolylacrylate um nur eine Auswahl verwendbarer Acrylate und Methacrylate zu nennen.

Selbstverständlich können auch Urethanacrylate als Komponente B) verwendet werden. Unter Urethanacrylaten versteht man Verbindungen mit mindestens einer Acrylsäureestergruppe die zusätzlich über mindestens eine

Urethanbindung verfügen. Es ist bekannt, dass solche Verbindungen durch Umsetzung eines Hydroxy-funktionellen Acrylsäureesters mit einer Isocyanatfunktionellen Verbindung erhalten werden können.

Bevorzugt werden dabei Acrylate und Methacrylate mit einem Brechungsindex $n_D^{20}$ (gemessen bei einer Wellenlänge von 405 nm) von größer 1,450 eingesetzt. Besonders bevorzugt werden Acrylate eingesetzt, die mindestens eine aromatische Struktureinheit enthalten und einen Brechungsindex $n_D^{20}$ (405 nm) von größer 1,500 haben. Als besonders geeignete Beispiele hierfür sind Acrylate und Methacrylate auf Basis von Bisphenol A oder dessen Derivate zu nennen sowie solche Acrylate und Methacrylate, die eine Thioarylgruppe enthalten.

Beispiele für die als Komponente B) verwendeten Urethanacrylate und/ oder Urethanmethacrylate sind die Additionsprodukte aromatischer Triisocyanate (ganz besonders bevorzugt Tris-(4-phenylisocyanato)-thiophosphat oder Trimere aromatischer Diisocyanate wie Toluylendiisocyanat) mit Hydroxyethylacrylat, Hydroxypropylacrylat, 4-Hydroxybutylacrylat, die Additionsprodukte von 3-Thiomethyl-phenylisocyanat mit Hydroxyethylacrylat, Hydroxypropylacrylat, 4-Hydroxybutylacrylat sowie ungesättigte Glycidyletheracrylaturethane (wie in den Anmeldungen WO 2008/125229 A1 und in der nicht vorveröffentlichten Anmeldung EP 09009651.2 beschrieben) oder deren beliebige Mischungen untereinander.

Eine weitere bevorzugte Ausführungsform sieht vor, dass als Schreibmonomere eine Kombination aus einem monofunktionellen und einem multifunktionellen Schreibmonomer verwendet wird.

Das monofunktionelle Schreibmonomer kann insbesondere die allgemeine Formel (II)

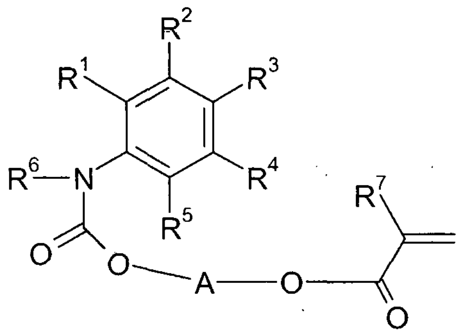

(II)

haben, in der $R^1$, $R^2$, $R^3$, $R^4$, $R^5$ jeweils unabhängig voneinander ein Wasserstoff- oder Halogenatom oder eine C1-C6-Alkyl-, Trifluormethyl-, C1-C6-Alkylthio-, C1-C6-Alkylseleno-, C1-C6-Alkyltelluro- oder Nitro-Gruppe sind, mit der Maßgabe dass wenigstens ein Substituent der Gruppe $R^1$, $R^2$, $R^3$, $R^4$, $R^5$ nicht Wasserstoff ist, $R^6$, $R^7$ jeweils für sich Wasserstoff oder eine C1-C6-Alkylgruppe sind und A ein gesättigter oder ungesättigter oder linearer oder verzweigter C1-C6-Alkyl-Rest oder ein Polyethylenoxid-Rest oder ein Polypropylenoxid-Rest mit jeweils 2-6 Widerholungseinheiten in der Polymerkette ist, und das monofunktionelle Schreibmonomer bevorzugt eine Glastemperatur $T_G < 0°C$ und bevorzugt einen Brechungsindex >1.50 bei 405 nm aufweist.

Das multifunktionelle Schreibmonomer kann insbesondere die allgemeine Formel (III)

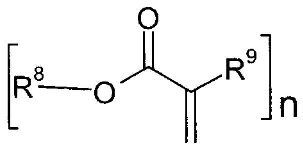

(III)

haben, in der $n \geq 2$ und $n \leq 4$ ist und $R^8$, $R^9$ Wasserstoff und / oder unabhängig voneinander lineare, verzweigte, cyclische oder heterocyclische unsubstituierte oder gegebenenfalls auch mit Heteroatomen substituierte organische Reste sind. Weiterhin kann das multifunktionelle Schreibmonomer bevorzugt einen Brechungsindex >1.50 bei 405 nm aufweisen.

Als Komponente C) werden ein oder mehrere Photoinitiatoren eingesetzt. Dies sind üblicherweise durch aktinische Strahlung aktivierbare Initiatoren, die eine Polymerisation der entsprechenden polymerisierbaren Gruppen auslösen. Photoinitiatoren sind an sich bekannte, kommerziell vertriebene Verbindungen, wobei zwischen unimolekularen (Typ I) und bimolekularen (Typ II) Initiatoren unterschieden wird. Desweiteren werden diese Initiatoren je nach chemischer Natur für die radikalische, die anionische (oder), die kationische (oder gemischte) Formen der vorgenannten Polymerisationen eingesetzt.

(Typ I)-Systeme für die radikalische Photopolymerisation sind z.B. aromatische Ketonverbindungen, z.B. Benzophenone in Kombination mit tertiären Aminen, Alkylbenzophenone, 4,4'-Bis(dimethylamino)benzophenon (Michlers

Keton), Anthron und halogenierte Benzophenone oder Mischungen der genannten Typen. Weiter geeignet sind (Typ II)-Initiatoren wie Benzoin und seine Derivate, Benzilketale, Acylphosphinoxide z.B. 2,4,6-Trimethyl-benzoyldiphenylphosphinoxid, Bisacylophosphinoxide, Phenylglyoxylsäureester, Campherchinon, alpha-Aminoalkylphenone, alpha-,alpha-Dialkoxyacetophenone, 1-[4-(Phenylthio)phenyl]octan-1,2-dion-2-(O-benzoyloxim), unterschiedlich substituierte Hexarylbisimidazole (HABI) mit geeigneten Coinitiatoren wie z.B. Mercaptobenzoxazol sowie alpha-Hydroxyalkylphenone. Auch die in EP-A 0223587 beschriebenen Photoinitiatorsysteme bestehend aus einer Mischung aus einem Ammoniumarylborat und einem oder mehreren Farbstoffen können als Photoinitiator eingesetzt werden. Als Ammoniumarylborat eignen sich beispielsweise Tetrabutylammonium Triphenylhexylborat, Tetrabutylammonium Triphenylbutylborat, Tetrabutylammonium Trinapthylbutylborat, Tetramethylammonium Triphenylbenzylborat, Tetra(n-hexyl)ammonium (sec-Butyl)triphenylborat, 1 -Methyl-3-octylimidazolium Dipentyldiphenylborat, Tetrabutylammonium Tris-(4-tert.-butyl)-phenylbutylborat, Tetrabutylammonium Tris-(3-fluorphenyl)-hexylborat und Tetrabutylammonium Tris-(3-Chlor-4-methylphenyl)-hexylborat. Als Farbstoffe eignen sich beispielsweise Neu-Methylenblau, Thionin, Basic Yellow, Pinacynol Chlorid, Rhodamin 6G, Gallocyanin, Ethylviolett, Victoria Blue R, Celestine Blue, Chinaldinrot, Kristallviolett, Brilliant Grün, Astrazon Orange G, Darrow Red, Pyronin Y, Basic Red 29, Pyrillium I, Safranin O, Cyanin und Methylenblau, Azur A (Cunningham et al., RadTech’98 North America UV/EB Conference Proceedings, Chicago, Apr. 19-22, 1998).

Die für die anionische Polymerisation verwendeten Photoinitiatoren sind in der Regel (Typ I)-Systeme und leiten sich von Übergangsmetall-Komplexen der ersten Reihe ab. Hier sind Chrom-Salze, wie z.B. trans-$Cr(NH_3)_2(NCS)_4$-(Kutal et al, Macromolecules 1991, 24, 6872) oder Ferrocenyl-Verbindungen (Yamaguchi et al. Macromolecules 2000, 33, 1152). Eine weitere Möglichkeit der anionischen Polymerisation besteht in der Verwendung von Farbstoffen, wie Kristallviolett Leukonitril oder Malchit Grün Leukonitril, die durch photolytischen Zerfall Cyanoacrylate polymerisieren können (Neckers et al. Macromolecules 2000, 33, 7761). Allerdings wird dabei das Chromophor in das Polymer eingebaut, so dass die resultierenden Polymere durchgefärbt sind.

Die für die kationische Polymerisation verwendeten Photoinitiatoren bestehen im wesentlichen aus drei Klassen: Aryldiazonium-Salze, Onium-Salze (hier speziell: Iodonium-, Sulfonium-und Selenonium-Salze) sowie Organometall-Verbindungen. Phenyldiazonium-Salze können unter Bestrahlung sowohl in Gegenwart als auch in Abwesenheit eines Wasserstoff-Donors ein Kation erzeugten, dass die Polymerisation initiiert. Die Effizienz des Gesamtsystems wird durch die Natur des verwendeten Gegenions zur Diazonium-Verbindung bestimmt. Bevorzugt sind hier die wenig reaktiven aber recht teuren SbF6-, AsF6- oder PF6-. Für den Einsatz in Beschichtung dünner Filme sind diese Verbindungen i.d.R wenig geeignet, da die den nach der Belichtung freigesetzten Stickstoff die Oberflächegüte herabgesetzt wird (pinholes) (Li et al., Polymeric Materials Science and Engineering, 2001, 84, 139). Sehr weit verbreitet und auch in vielerlei Form kommerziell erhältlich sind Onium-Salze, speziell Sulfonium- und Iodonium-Salze. Die Photochemie dieser Verbindungen ist nachhaltig untersucht worden. Die Iodonium-Salze zerfallen nach der Anregung zunächst homolytisch und erzeugen somit ein Radikal und ein Radikalanion, welches sich durch H-Abstraktion stabilisiert und ein Proton freisetzt und dann die kationische Polymerisation startet (Dektar et al. J. Org. Chem. 1990, 55, 639; J. Org. Chem., 1991, 56. 1838). Dieser Mechanismus ermöglicht den Einsatz von Iodonium-Salzen ebenfalls für die radikalische Photopolymerisation. Hierbei kommt erneut der Wahl des Gegenions eine große Bedeutung zu, bevorzugt werden ebenfalls $SbF_6^-$, $AsF_6^-$ oder $PF_6^-$. Ansonsten in dieser Strukturklasse die Wahl der Substitution des Aromaten recht frei und im wesentlichen durch die Verfügbarkeit geeigneter Startbausteine für die Synthese bestimmt. Bei den Sulfonium-Salzen handelt es sich um Verbindungen, die in nach Norrish(II) zerfallen (Crivello et al., Macromolecules, 2000, 33, 825). Auch bei den Sulfonium-Salzen kommt der Wahl des Gegenions eine kritische Bedeutung zu, die sich im Wesentlichen in der Härtungsgeschwindigkeit der Polymere äußert. Die besten Ergebnisse werden i.d.R. mit $SbF_6$- Salzen erzielt. Da die Eigenabsorption von Iodonium- und Sulfonium-Salze bei <300nm liegt, müssen diese Verbindungen für die Photopolymerisation mit nahem UV oder kurzwelligem sichtbarem Licht entsprechend sensibilisiert werden. Dies gelingt durch die Verwendung von höher absorbierenden Aromaten wie z.B. Anthracen und Derivaten (Gu et al., Am. Chem. Soc. Polymer Preprints, 2000, 41 (2), 1266) oder Phenothiazin bzw. dessen Derivate (Hua et al, Macromolecules 2001, 34, 2488-2494).

Es kann vorteilhaft sein auch Gemische dieser Verbindungen einzusetzen. Je nach zur Härtung verwendeter Strahlungsquelle muss Typ und Konzentration an Photoinitiator in dem Fachmann bekannter Weise angepasst werden. Näheres ist zum Beispiel in P. K. T. Oldring (Ed.), Chemistry & Technology of UV & EB Formulations For Coatings, Inks & Paints, Vol. 3, 1991, SITA Tech-nology, London, S. 61 - 328 beschrieben.

Bevorzugte Photoinitiatoren C) sind Mischungen aus Tetrabutylammonium Triphenylhexylborat, Tetrabutylammonium Triphenylbutylborat, Tetrabutylammonium Trinapthylbutylborat, Tetrabutylammonium Tris-(4-tert.-butyl)-phenylbutylborat, Tetrabutylammonium Tris-(3-fluorphenyl)-hexylborat und Tetrabutylammonium Tris-(3-Chlor-4-methylphenyl)-hexylborat mit Farbstoffen wie beispielsweise Astrazon Orange G, Methylenblau, Neu Methylenblau, Azur A, Pyrillium I, Safranin O, Cyanin, Gallocyanin, Brilliant Grün, Kristallviolett, Ethylviolett und Thionin.

Das verwendete Photoinitiatorsystem kann vorzugsweise einen anionischen, kationischen oder neutralen Farbstoff und einen Coinitiator umfassen.

Die Photopolymer-Formulierung kann zusätzlich Urethane als Weichmacher enthalten (Komponente D), wobei

die Urethane bevorzugt mit wenigstens einem Fluoratom substituiert sein können.

Bei den Urethanen handelt es sich vorzugsweise um Verbindungen, die ein Strukturelement der allgemeinen Formel IV aufweisen.

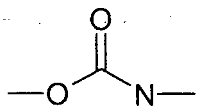

Formel IV

Sie können aus monofunktionellen Alkoholen und monofunktionellen Isocyanaten wie oben beschrieben erhalten werden. Bevorzugt sind diese mit wenigstens einem Fluoratom substituiert.

Weiter bevorzugt ist, wenn die Fluorurethane die allgemeine Formel V

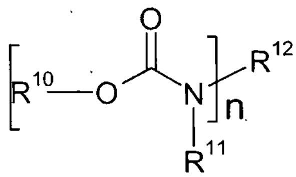

Formel V

aufweisen, in der $n \geq 1$ und $n \leq 8$ ist und $R^{10}$, $R^{11}$, $R^{12}$ Wasserstoff und / oder unabhängig voneinander lineare, verzweigte, cyclische oder heterocyclische unsubstituierte oder gegebenenfalls auch mit Heteroatomen substituierte organische Reste sind, wobei mindestens einer der Reste $R^{10}$, $R^{11}$, $R^{12}$ mit wenigstens einem Fluoratom substituiert ist. Besonders bevorzugt ist hierbei $R^{10}$ ein organischer Rest mit mindestens einem Fluoratom.

Gemäß einer weiteren Ausführungsform kann $R^{10}$ 1-20 $CF_2$ Gruppen und / oder eine oder mehrere $CF_3$ Gruppen, besonders bevorzugt 1-15 $CF_2$ Gruppen und / oder eine oder mehrere $CF_3$ Gruppen, insbesondere bevorzugt 1-10 $CF_2$ Gruppen und / oder eine oder mehrere $CF_3$ Gruppen, ganz besonders bevorzugt 1-8 $CF_2$ Gruppen und / oder eine oder mehrere $CF_3$ Gruppen, $R^{11}$ einen C1-C20 Alkyl-Rest, bevorzugt einen C1-C15 Alkyl-Rest besonders bevorzugt einen C1-C10 Alkyl-Rest oder Wasserstoff, und / oder $R^{12}$ einen C1-C20 Alkyl-Rest, bevorzugt einen C1-C15 Alkyl-Rest besonders bevorzugt einen C1-C10 Alkyl-Rest oder Wasserstoff umfassen.

Die Fluorurethane können einen Fluorgehalt von 10-80 Gew.-% Fluor, bevorzugt von 13-70 Gew.-% Fluor und besonders bevorzugt 17,5-65 Gew.-% Fluor aufweisen.

Weitere Bestandteile der Photopolymer-Formulierung können als Komponente E) sein: Radikalstabilisatoren, gegebenenfalls Katalysatoren oder andere Hilfs- und Zusatzstoffe.

Als Beispiele für Radikalstabilisatoren sind Inhibitoren und Antioxidantien wie sie z.B. in "Methoden der organischen Chemie" (Houben-Weyl), 4. Auflage, Band XIV/1, S. 433ff, Georg Thieme Verlag, Stuttgart 1961, beschrieben sind, geeignet. Geeignete Stoffklassen sind beispielsweise Phenole wie z.B. 2,6-Di-tert-butyl-4-methylphenol, Kresole, Hydrochinone, Benzylalkohole wie z.B. Benzhydrol, ggf. auch Chinone wie z. B. 2,5-Di-*tert.*-Butylchinon, ggf. auch aromatische Amine wie Diisopropylamin oder Phenothiazin.

Bevorzugt sind 2,6-Di-*tert.*-butyl-4-methylphenol, Phenothiazin, p-Methyoxyphenol, 2-Methoxy-p-hydrochinon und Benzhydrol.

Gegebenenfalls können ein oder mehrere Katalysatoren eingesetzt werden. Dabei handelt es sich um Katalysatoren zur Beschleunigung der Urethanbildung. Bekannte Katalysatoren hierfür sind beispielsweise Zinnoctoat, Zinkoktoat, Dibutylzinndilaurat, Dimethylbis[(1-oxoneodecyl)oxy]stannan, Dimethylzinndicarboxylat, Zirkonium-bis (ethylhexanoat), Zirconium-acteylacetonat oder tertiäre Aminen wie beispielsweise 1,4-Diazabicyclo[2.2.2]octan, Diazabicyclononan, Diazabicycloundecan, 1,1,3,3-Tetramethylguanidin, 1,3,4,6,7,8-H exahydro- 1-methyl-2H-pyrimido (1,2-a)pyrimidin.

Bevorzugt sind Dibutylzinndilaurat, Dimethylbis[(1-oxoneodecyl)oxy]stannan, Dimethylzinndicarboxylat, 1,4-Diazabicyclo[2.2.2]octan, Diazabicyclononan, Diazabicycloundecan, 1,1,3,3-Tetramethylguanidin, 1,3,4,6,7,8-Hexahydro-1-methyl-2H-pyrimido(1,2-a)pyrimidin.

Selbstverständlich können gegebenenfalls weitere Hilfs- oder Zusatzstoffe eingesetzt werden. Dabei kann es sich beispielsweise um im Bereich der Lacktechnologie gängige Zusatzstoffe wie Lösemittel, Weichmacher, Verlaufsmittel oder Haftvermittler handeln. Es kann auch von Vorteil sein, gleichzeitig mehrere Zusatzstoffe eines Typs zu verwenden. Selbstverständlich kann es ebenfalls von Vorteil sein, mehrere Zusatzstoffe mehrerer Typen zu verwenden.

Gemäß einer weiteren bevorzugten Ausführungsform der Erfindung ist vorgesehen, dass die Photopolymer-Formulierung 10 bis 89,999 Gew.-%, bevorzugt 25 bis 70 Gew.-% Matrixpolymere, 10 bis 60 Gew.-%, bevorzugt 25 bis 50 Gew.-% Schreibmonomere, 0,001 bis 5 Gew.-% Photoinitiatoren und gegebenenfalls 0 bis 4 Gew.-%, bevorzugt 0

bis 2 Gew.-% Katalysatoren, 0 bis 5 Gew.-% , bevorzugt 0,001 bis 1 Gew.-% Radikalstabilisatoren 0 bis 30 Gew.-%, bevorzugt 0 bis 25 Gew.-% Weichmacher und 0 bis 5 Gew.-%, bevorzugt 0,1 bis 5 Gew.-% weitere Additive enthält, wobei die Summe aller Bestandteile 100 Gew.-% beträgt.

Besonders bevorzugt werden Photopolymer-Formulierungen mit 25 bis 70 Gew.-% Matrixpolymeren bestehend aus Verbindungen der Komponente a) und der Komponente b), 25 bis 50 Gew.-% Schreibmonomere, 0,001 bis 5 Gew.-% Photoinitiatoren, 0 bis 2 Gew.-% Katalysatoren, 0,001 bis 1 Gew.-% Radikalstabilisatoren gegebenenfalls 0 bis 25 Gew.-% der oben beschriebenen Urethane und gegebenenfalls 0,1 bis 5 Gew.-% weiterer Additive eingesetzt.

Ein Film aus der Photopolymer-Formulierung kann beispielsweise mit Hilfe einer Rollenbeschichtungsanlage auf ein Substrat in der Form einer Trägerfolie aufgebracht werden.

Dies kann durch eine Kombination verschiedener Prozessschritte erfolgen, bei denen dem Fachmann bekannte Zwangsdosierpumpen, Vakuumentgaser, Plattenfilter, Statische Mischer, Schlitzdüsen oder verschiedene Rakelsysteme, Ein-Rollenabwickler, Lufttrockner, Trockenkaschiereinrichtung und eine Ein-Rollenaufwickeleinrichtung, eingesetzt werden. Speziell eine Beschichtungseinrichtungen, die z.B. Schlitzdüsen und Rakelsysteme aufweisen, sind für die Applikation von flüssigen Photopolymer-Formulierungen auf bewegende Trägermaterialien geeignet und zeichnen sich durch eine hohe Genauigkeit in der Applikationsschichtdicke aus.

In einer bevorzugten Ausführungsform umfasst der Beschichtungsprozess der Trägerfolie die nachfolgenden Einzelschritte zur Behandlung vorgenannten Photopolymerverbindungen:

I. Fördern und Dosieren zum einen der Komponente a) gegebenenfalls gemischt mit einer oder mehrerer der Komponenten B), C), D) und E) sowie zum anderen separat dazu der Komponente b) gegebenenfalls gemischt mit einer oder mehrerer der Komponenten B), C), D) und E)
II. Entgasen der gemäß I) geförderten, dosierten und gegebenenfalls vorvermischten Ströme
III. Filtrieren der nach II) erhaltenen Mischung
IV. Homogenisieren der nach III) erhaltenen Mischung
V. Abwicklung und Vorbehandlung des Trägermaterials
VI. Beschichten des Trägermaterials mit der nach Schritt IV) erhaltenen Mischung
VII. Trocknung des nach VI) beschichteten Films
VIII. Kaschieren des nach VII) erhaltenen beschichteten Films
IX. Aufwicklung des nach VIII) erhaltenen kaschierten Films

Weitere bevorzugte Ausführungsform des Verfahrens sind in der bereits zitierten, noch nicht veröffentlichten europäischen Anmeldung EP 09001952.2 offenbart.

Die Figur 1 zeigt den schematischen Aufbau einer typischen Beschichtungsanlage, inklusive der Anordnung der Vorbehandlung des Beschichtungsmaterials (1-5), den schematischer Verlauf des Trägermaterials (8 + 9), die Beschichtungseinrichtung zum Applizieren auf ein Trägermaterial (6) und den anschließenden Trocknungsprozess (7).

Bezugszeichen in der Figur 1:

1 Vorratsbehälter
2 Dosiereinrichtung
3 Vakuumentgasung
4 Filter
5 Statischer Mischer
6 Beschichtungseinrichtung
7 Trockner
8 Bahnlauf
9 Produkt-Kaschierung

Durch die Kombination der in der Figur 1 dargestellten Prozessschritte, wird eine höhere Schichtdickengenauigkeit an applizierten Photopolymerschichtdicken auf sich bewegenden Trägermaterialien erzielt.

Gemäß einer weiteren bevorzugten Ausführungsform können die holographischen Filme Folienverbunde sein, die aus einer oder mehreren Trägerfolien, einer oder mehreren Photopolymerfilmen und einer oder mehrer Schutzfolien in beliebiger Anordnung bestehen können.

Bevorzugte Materialien oder Material verbünde der Trägerschicht basieren auf Polycarbonat (PC), Polyethylenterephthalat (PET), Polybutylenterephthalat, Polyethylen, Polypropylen, Celluloseacetat, Cellulosehydrat, Cellulosenitrat, Cycloolefinpolymere, Polystyrol, Polyepoxide, Polysulfon, Cellulosetriacetat (CTA), Polyamid, Polymethylmethacrylat, Polyvinylchlorid, Polyvinylbutyral oder Polydicyclopentadien oder deren Mischungen. Daneben können Materialverbünde wie Folienlaminate oder Coextrudate als Trägerfolie Anwendung finden. Beispiele für Materialverbünde sind Duplex- und Triplexfolien aufgebaut nach einem der Schemata A/B, A/B/A oder A/B/C wie PC/PET, PET/PC/PET und PC/TPU (TPU = Thermoplastisches Polyurethan). Besonders bevorzugt wird PC und PET als Trägerfolie verwendet.

Bevorzugt sind transparente Trägerfolien, die optisch klar, d.h. nicht trüb sind. Die Trübung (engl. Haze) ist messbar über den Haze-Wert, welcher kleiner als 3,5%, bevorzugt kleiner als 1%, besonders bevorzugt kleiner als 0,3% ist.

Der Haze-Wert beschreibt den Anteil des transmittierten Lichts, der von der durchstrahlten Probe nach vorne gestreut wird. Somit ist er ein Maß für die Opazität oder Trübung transparenter Materialien und quantifiziert Materialfehler, Partikel, Inhomogenitäten oder kristalline Phasengrenzen in dem Material oder seiner Oberfläche, die die klare Durchsicht stören. Das Verfahren zur Messung der Trübung wird in der Norm ASTM D 1003 beschrieben.

Bevorzugt weist die Trägerfolie eine nicht zu hohe optische Retardation auf, d.h. typischerweise liegt eine mittlere optische Retardation von weniger als 1000 nm, bevorzugt von weniger als 700 nm, besonders bevorzugt von weniger als 300 nm vor. Die automatische und objektive Messung der optischen Retardation erfolgt mit einem bildgebenden Polarimeter, z.B. von der Firma ilis GmbH, Modell StainMatic® M3/M. Die optische Retardation wird in senkrechter Inzidenz gemessen. Die für die Trägerfolie angegebenen Werte für die Retardation sind laterale Mittelwerte

Die Trägerfolie hat, einschließlich eventueller ein oder beidseitiger Beschichtungen, typischerweise eine Dicke von 5 bis 2000 µm, bevorzugt 8 bis 300 µm, besonders bevorzugt 30 bis 200 µm und insbesondere 125 bis 175 µm oder 30 bis 45 µm.

Zusätzlich zu den Bestandteilen und können für den Folienverbund ein oder mehrere Abdeckschichten auf der Photopolymerschicht aufweisen, um diese vor Schmutz und Umwelteinflüssen zu schützen. Hierzu können Kunststofffolien oder Folienverbundsysteme, aber auch Klarlacke verwendet werden.

Als Abdeckschichten werden bevorzugt Folienmaterialien analog den in der Trägerfolie eingesetzten Materialien verwendet, wobei diese eine Dicke von typischerweise 5 bis 200 µm, bevorzugt 8 bis 125 µm, besonders bevorzugt 20 bis 50 µm.

Bevorzugt sind Abdeckschichten mit einer möglichst glatten Oberfläche. Als Maß gilt die Rauigkeit bestimmt nach DIN EN ISO 4288 "Geometrische Produktspezifikation (GPS) - Oberflächenbeschaffenheit..." (engl. "Geometrical Product Specifications (GPS) - Surface texture...", Prüfbedingung R3z Vorderseite und Rückseite. Bevorzugte Rauigkeiten liegen im Bereich kleiner oder gleich 2 µm, bevorzugt kleiner oder gleich 0,5 µm.

Als Kaschierfolien werden bevorzugt PE- oder PET-Folien einer Dicke von 20 bis 60 µm verwendet, besonders bevorzugt wird eine Polyethylenfolie von 40 µm Dicke verwendet.

Es können weitere Schutzschichten, so z.B. eine untere Kaschierung der Trägerfolie Anwedung finden.

Ein weiterer Gegenstand der Erfindung liegt in der Verdruckbarkeit der beschriebenen Photopolymer-Formulierungen. Unter Druckverfahren werden im Allgemeinen Arbeitsweisen und - methoden zur Vervielfältigung zweidimensionaler Vorlagen verstanden. Als mögliche Druckverfahren können z.B. Hochdruck, Flachdruck, Tiefdruck, Siebdruck, Tampondruck oder Stempeldruck eingesetzt werden. Außerdem können auch neuere digitale Drucktechniken wie z.B. Piezo Drucker oder Bubble-Jet Drucker angewandt werden.

Ein weiterer Gegenstand der Erfindung ist ein nach dem erfindungsgemäßen Verfahren erhältlicher holographischer Film.

Noch ein weiterer Gegenstand der vorliegenden Erfindung ist die Verwendung der holographischen Filme zur Aufzeichnung visueller Hologramme, zur Herstellung von optischen Elementen, Bildern, Darstellungen sowie ein Verfahren zur Aufzeichnung von Hologrammen unter Verwendung der holographischen Filme.

Mit den holographischen Filmen können durch entsprechende Belichtungsprozesse Hologramme für optische Anwendungen im gesamten sichtbaren Bereich sowie im nahen UV-Bereich (300 - 800 nm) hergestellt werden. Visuelle Hologramme umfassen alle Hologramme, die nach dem Fachmann bekannten Verfahren aufgezeichnet werden können, darunter fallen unter anderem In-Line (Gabor) Hologramme, Off-Axis Hologramme, Full-Aperture Transfer Hologramme, Weißlicht-Transmissionshologramme ("Regenbogenhologramme"), Denisyukhologramme, Off-Axis Reflektionshologramme, Edge-Lit Hologramme sowie Holographische Stereogramme, bevorzugt sind Reflexionshologramme, Denisyukhologramme, Transmissionshologramme. Bevorzugt sind optische Elemente wie Linsen, Spiegel, Umlenkspiegel, Filter, Streuscheiben, Beugungselemente, Lichtleiter, Lichtlenker (waveguides), Projektionsscheiben und/oder Masken haben. Häufig zeigen diese optischen Elemente eine Frequenzselektivität je nachdem wie die Hologramme belichtet wurden und welche Dimensionen das Holgramm hat.

Zudem können mittels der holographischen Filme auch holographische Bilder oder Darstellungen hergestellt werden, wie zum Beispiel für persönliche Portraits, biometrische Darstellungen in Sicherheitsdokumenten, oder allgemein von Bilder oder Bildstrukturen für Werbung, Sicherheitslabels, Markenschutz, Markenbranding, Etiketten, Designelementen, Dekorationen, Illustrationen, Sammelkarten, Bilder und dergleichen sowie Bilder, die digitale Daten repräsentieren können u.a. auch in Kombination mit den zuvor dargestellten Produkten. Holographische Bilder können den Eindruck eines dreidimensionalen Bildes haben, sie können aber auch Bildsequenzen, kurze Filme oder eine Anzahl

von verschiedenen Objekten darstellen, je nachdem aus welchem Winkel, mit welcher (auch bewegten) Lichtquelle etc. diese beleuchtet wird. Aufgrund dieser vielfältigen Designmöglichkeiten stellen Hologramme, insbesondere Volumenhologramme, eine attraktive technische Lösung für die oben genannten Anwendung dar.

**Beispiele:**

Die folgenden Beispiele dienen zur Erläuterung der Erfindung. Sofern nicht abweichend vermerkt beziehen sich alle Prozentangaben auf Gewichtsprozent.

**Bezeichnungen die im folgenden Verwendung finden:**

Photopolymer-Formulierungen umfassend:

- Dreidimensional vernetzte organische Matrixpolylmere A). Besonders bevorzugt sind solche dreidimensional vernetzten Polymere, die als Vorstufen aus

  o einer Isocyanatkomponente a)

  o und einer Isocyanat-reaktiven Komponente b) aufgebaut sind und

  o mit Hilfe einer Katalysator Komponente E) vernetzt werden, der in der Regel in Lösung zugegeben wird,

- Schreibmonomere B), die unter Einwirkung aktinischer Strahlung mit ethylenisch ungesättigten Verbindungen unter Polymerisation reagierende Gruppen (strahlenhärtende Gruppen) aufweisen und in dieser Matrix gelöst oder verteilt vorliegen

- wenigstens einen Photoinitiatorsystem C).

- optional eine nicht photopolymerisierbare Komponente D).

gegebenenfalls Katalysatoren, Radikalstabilisatoren, Lösungsmittel, Additive sowie andere Hilfs- und / oder Zusatzstoffe E)

**Messmethoden:**

Die angegebenen OH-Zahlen wurden gemäß DIN 53240-2 bestimmt.
Die angegebenen NCO-Werte (Isocyanat-Gehalte) wurden gemäß DIN EN ISO 11909 bestimmt.
Für die Bestimmung der Viskosität wurde die zu untersuchende Komponente oder Mischung wenn nicht anders angegeben bei 20°C in einem Kegel Platte Messsystem eines Rheometers (Firma Anton Paar Physica Modell MCR 51) aufgetragen. Die Messung wird bei folgenden Bedingungen durchgeführt:

- Messkörper: Kegel CP 25, d = 25mm, Winkel = 1°

- Messspalt als Abstand zwischen Kegel und Platte: 0,047 mm

- Messdauer: 10 sec.

- Bestimmung der Viskosität bei einer Scherrate von 250 1/sec.

**Bestimmung des TGA95-Wertes**

Die TGA 95 Werte der einzelnen Komponenten können bestimmt werden, indem eine Menge der Probe der jeweiligen Komponente von ca. 10 mg in ein Aluminiumpfännchen mit einem Volumen von 70 µl eingewogen, das Aluminiumpfännchen einen Ofen einer Thennowaage, bevorzugt einer Thermowaage TG50 der Firma Mettler-Toledo, eingebracht und bei einer konstanten Aufheizrate des Ofens von 20 K/min der Massenverlust der Probe im offenen Aluminiumpfännchen gemessen wird, wobei die Starttemperatur 30 °C und die Endtemperatur 600 °C des Ofens betragen, der Ofen während der Bestimmung mit einem Stickstoffstrom einer Stärke von 200 ml/min durchgespült und als TGA 95 Wert der jeweiligen Komponente die Temperatur ermittelt wird, bei der ein Massenverlust der Probe von 5 Gew.-%,

bezogen auf die ursprünglich eingewogene Menge der Probe, eingetreten ist.

**Messung der holographischen Eigenschaften DE und Δn der holographischen Medien mittels Zweistrahlinterferenz in Reflexionsanordnung**

Zur Messung der holographischen Performance wird die Schutzfolie des holographischen Films abgezogen und der holographische Film mit der Photopolymerseite auf eine 1 mm dicke Glasplatte geeigneter Länge und Breite mit einer Gummiwalze unter leichtem Druck auflaminiert. Dieser Sandwich aus Glas und Photopolymerfolie kann nun verwendet werden, um die holographischen Performanceparameter DE und Δn zu bestimmen.

Der Strahl eines He-Ne Lasers (Emissionswellenlänge 633 nm) wurde mit Hilfe des Raumfilter (SF) und zusammen mit der Kollimationslinse (CL) in einen parallelen homogenen Strahl umgewandelt. Die finalen Querschnitte des Signal und Referenzstrahls werden durch die Irisblenden (I) festgelegt. Der Durchmesser der Irisblendenöffnung beträgt 0.4 cm. Die polarisationsabhängigen Strahlteiler (PBS) teilen den Laserstrahl in zwei kohärente gleich polarisierte Strahlen. Über die λ/2 Plättchen wurden die Leistung des Referenzstrahls auf 0.5 mW und die Leistung des Signalstrahls auf 0.65 mW eingestellt. Die Leistungen wurden mit den Halbleiterdetektoren (D) bei ausgebauter Probe bestimmt. Der Einfallswinkel ($\alpha_0$) des Referenzstrahls beträgt -21.8°, der Einfallswinkel ($\beta_0$) des Signalstrahls beträgt 41.8°. Die Winkel werden ausgehend von der Probennormale zur Strahlrichtung gemessen. Gemäß Figur 3 hat daher $\alpha_0$ ein negatives Vorzeichen und $\beta_0$ ein positives Vorzeichen. Am Ort der Probe (Medium) erzeugte das Interferenzfeld der zwei überlappenden Strahlen ein Gitter heller und dunkler Streifen die senkrecht zur Winkelhalbierenden der zwei auf die Probe einfallenden Strahlen liegen (Reflexionshologramm). Der Streifenabstand Λ, auch Gitterperiode genannt, im Medium beträgt ~ 225 nm (der Brechungsindex des Mediums zu ~1.504 angenommen).

Figur 3 zeigt den holographischen Versuchsaufbau, mit dem die Beugungseffizienz (DE) der Medien gemessen wurde.

Es wurden auf folgende Weise Hologramme in das Medium geschrieben:

- Beide Shutter (S) sind für die Belichtungszeit *t* geöffnet.
- Danach wurde bei geschlossenen Shuttern (S) dem Medium 5 Minuten Zeit für die Diffusion der noch nicht polymerisierten Schreibmonomere gelassen.

Die geschriebenen Hologramme wurden nun auf folgende Weise ausgelesen. Der Shutter des Signalstrahls blieb geschlossen. Der Shutter des Referenzstrahls war geöffnet. Die Irisblende des Referenzstrahls wurde auf einen Durchmesser < 1 mm geschlossen. Damit erreichte man, dass für alle Drehwinkel (Ω) des Mediums der Strahl immer vollständig im zuvor geschriebenen Hologramm lag. Der Drehtisch überstrich nun computergesteuert den Winkelbereich von $\Omega_{min}$ bis $\Omega_{max}$ mit einer Winkelschrittweite von 0.05°. Ω wird von der Probennormale zur Referenzrichtung des Drehtisches gemessen. Die Referenzrichtung des Drehtisches ergibt sich dann wenn beim Schreiben des Hologramms der Einfallswinkel des Referenz- und des Signalstrahls betragsmäßig gleich sind also $\alpha_0$ = -31.8° und $\beta_0$ = 31.8° gilt. Dann beträgt $\Omega_{recording}$ = 0°. Für $\alpha_0$ = -21.8° und $\beta_0$ = 41.8° beträgt $\Omega_{recording}$ daher 10°. Allgemein gilt für das Interferenzfeld beim Schreiben ("recording") des Hologramms:

$$\alpha_0 = \theta_0 + \Omega_{recording}.$$

$\theta_0$ ist der Halbwinkel im Laborsystem außerhalb des Mediums und es gilt beim Schreiben des Hologramms:

$$\theta_0 = \frac{\alpha_0 - \beta_0}{2}.$$

In diesem Fall gilt also $\theta_0$ = -31.8°. An jedem angefahrenen Drehwinkel Ω wurden die Leistungen des in der nullten Ordnung transmittierten Strahls mittels des entsprechenden Detektors D und die Leistungen des in die erste Ordnung abgebeugten Strahls mittels des Detektors D gemessen. Die Beugungseffizienz ergab sich bei jedem angefahrenen Winkel Ω als der Quotient aus:

$$\eta = \frac{P_D}{P_D + P_T}$$

$P_D$ ist die Leistung im Detektor des abgebeugten Strahls und $P_T$ ist die Leistung im Detektor des transmittierten Strahls.

Mittels des oben beschriebenen Verfahrens wurde die Braggkurve, sie beschreibt den Beugungswirkungsgrad $\eta$ in Abhängigkeit des Drehwinkels $\Omega$ des geschriebenen Hologramms gemessen und in einem Computer gespeichert. Zusätzlich wurde auch die in die nullte Ordnung transmittierte Intensität gegen den Drehwinkel $\Omega$ aufgezeichnet und in einem Computer gespeichert.

Die maximale Beugungseffizienz (DE = $\eta_{max}$) des Hologramms, also sein Spitzenwert, wurde bei $\Omega_{reconstruction}$ ermittelt. Eventuell musste dazu die Position des Detektors des abgebeugten Strahls verändert werden, um diesen maximalen Wert zu bestimmen.

Der Brechungsindexkontrast $\Delta$n und die Dicke d der Photopolymerschicht wurde nun mittels der Coupled Wave Theorie (siehe; H. Kogelnik, The Bell System Technical Journal, Volume 48, November 1969, Number 9 Seite 2909 - Seite 2947) an die gemessene Braggkurve und den Winkelverlauf der transmittierten Intensität ermittelt. Dabei ist zu beachten, dass wegen der durch die Photopolymerisation auftretenden Dickenschwindung der Streifenabstand Λ' des Hologramms und die Orientierung der Streifen (slant) vom Streifenabstand Λ des Interferenzmusters und dessen Orientierung abweichen kann. Demnach wird auch der Winkel $\alpha_0$' bzw. der entsprechende Winkel des Drehtisches $\Omega_{reconstruction}$, bei dem maximale Beugungseffizienz erreicht wird von $\alpha_0$ bzw. vom entsprechenden $\Omega_{recording}$ abweichen. Dadurch verändert sich die Bragg-Bedingung. Diese Veränderung wird im Auswerteverfahren berücksichtigt. Das Auswerteverfahren wird im Folgenden beschrieben:

Alle geometrischen Größen, die sich auf das geschriebene Hologramm beziehen und nicht auf das Interferenzmuster werden als gestrichene Größen dargestellt.

Für die Braggkurve $\eta(\Omega)$ eines Reflexionshologramms gilt nach Kogelnik:

$$\eta = \begin{cases} \dfrac{1}{1 - \dfrac{1-(\xi/\nu)^2}{\sin^2\left(\sqrt{\xi^2 - \nu^2}\right)}}, \text{für } \nu^2 - \xi^2 < 0 \\ \dfrac{1}{1 + \dfrac{1-(\xi/\nu)^2}{\sinh^2\left(\sqrt{\nu^2 - \xi^2}\right)}}, \text{für } \nu^2 - \xi^2 \geq 0 \end{cases}$$

mit:

$$\nu = \frac{\pi \cdot \Delta n \cdot d'}{\lambda \cdot \sqrt{|c_s \cdot c_r|}}$$

$$\xi = -\frac{d'}{2 \cdot c_s} \cdot DP$$

$$c_s = \cos(\vartheta') - \cos(\psi') \cdot \frac{\lambda}{n \cdot \Lambda'}$$

$$c_r = \cos(\vartheta')$$

$$DP = \frac{\pi}{\Lambda'} \cdot \left(2 \cdot \cos(\psi' - \vartheta') - \frac{\lambda}{n \cdot \Lambda'}\right)$$

$$\psi' = \frac{\beta' + \alpha'}{2}$$

$$\Lambda' = \frac{\lambda}{2 \cdot n \cdot \cos(\psi' - \alpha')}$$

Beim Auslesen des Hologramms ("reconstruction") gilt wie analog oben dargestellt:

$$\vartheta'_0 = \theta_0 + \Omega$$

$$\sin(\vartheta'_0) = n \cdot \sin(\vartheta')$$

An der Bragg-Bedingung ist das "Dephasing" DP = 0. Und es folgt entsprechend:

$$\alpha'_0 = \theta_0 + \Omega_{reconstruction}$$

$$\sin(\alpha'_0) = n \cdot \sin(\alpha')$$

Der noch unbekannt Winkel $\beta'$ kann aus dem Vergleich der Bragg-Bedingung des Interferenzfeldes beim Schreiben des Hologramms und der Bragg-Bedingung beim Auslesen des Hologramms ermittelt werden unter der Annahme, dass nur Dickenschwindung stattfindet. Dann folgt:

$$\sin(\beta') = \frac{1}{n} \cdot \left[\sin(\alpha_0) + \sin(\beta_0) - \sin(\theta_0 + \Omega_{reconstruction})\right]$$

$\nu$ ist die Gitterstärke, $\xi$ ist der Detuning Parameter und $\psi'$ die Orientierung (Slant) des Brechungsindexgitters das geschrieben wurde. $\alpha'$ und $\beta'$ entsprechen den Winkeln $\alpha_0$ und $\beta_0$ des Interferenzfeldes beim Schreiben des Hologramms, aber im Medium gemessen und für das Gitter des Hologramms gültig (nach Dickenschwindung). n ist der mittlere Brechungsindex des Photopolymers und wurde zu 1.504 gesetzt. $\lambda$ ist die Wellenlänge des Laserlichts im Vakuum.

Die maximale Beugungseffizienz (DE = $\eta_{max}$) ergibt sich dann für $\xi = 0$ zu:

$$DE = \tanh^2(\nu) = \tanh^2\left(\frac{\pi \cdot \Delta n \cdot d'}{\lambda \cdot \sqrt{\cos(\alpha') \cdot \cos(\alpha' - 2\psi)}}\right)$$

Die Messdaten der Beugungseffizienz, die theoretische Braggkurve und die transmittierte Intensität werden wie in Figur 4 gezeigt gegen den zentrierten Drehwinkel $\Delta\Omega \equiv \Omega_{reconstruction} - \Omega = \alpha'_0 - \vartheta'_0$ auch Winkeldetuning genannt, aufgetragen.

Da DE bekannt ist wird die Form der theoretischen Braggkurve nach Kogelnik nur noch durch die Dicke *d'* der Photopolymerschicht bestimmt. $\Delta n$ wird über DE für gegebene Dicke *d'* so nachkorrigiert, dass Messung und Theorie von DE immer übereinstimmen. *d'* wird nun solange angepasst bis die Winkelpositionen der ersten Nebenminima der theoretischen Braggkurve mit den Winkelpositionen der ersten Nebenmaxima der transmittierten Intensität übereinstimmen und zudem die volle Breite bei halber Höhe (FWHM) für die theoretische Braggkurve und für die transmittierte Intensität übereinstimmen.

Da die Richtung in der ein Reflexionshologramm bei der Rekonstruktion mittels eines $\Omega$-Scans mitrotiert, der Detektor für das abgebeugte Licht aber nur einen endlichen Winkelbereich erfassen kann, wird die Braggkurve von breiten Holgrammen (kleines *d'*) bei einem $\Omega$-Scan nicht vollständig erfasst, sondern nur der zentrale Bereich, bei geeigneter Detektorpositionierung. Daher wird die zur Braggkurve komplementäre Form der transmittierten Intensität zur Anpassung der Schichtdicke *d'* zusätzlich herangezogen.

Figur 4 zeigt die Darstellung der Braggkurve $\eta$ nach der Coupled Wave Theorie (gestrichelte Linie), des gemessenen Beugungswirkungsgrades (ausgefüllte Kreise) und der transmittierten Leistung (schwarz durchgezogene Linie) gegen das Winkeldetuning $\Delta\Omega$.

Für eine Formulierung wurde diese Prozedur eventuell mehrfach für verschiedene Belichtungszeiten t an verschiedenen Medien wiederholt, um festzustellen bei welcher mittleren E-nergiedosis des einfallenden Laserstrahls beim Schreiben des Hologramms DE in den Sättigungswert übergeht. Die mittlere Energiedosis *E* ergibt sich wie folgt aus den Leistungen der zwei den Winkeln $\alpha_0$ und $\beta_0$ zugeordneten Teilstrahlen (Referenzstrahl mit $P_r$ = 0.50 mW und Signalstrahl mit $P_s$ = 0.63 mW), der Belichtungszeit t und dem Durchmesser der Irisblende (0.4 cm):

$$E\,(\mathrm{mJ/cm^2}) = \frac{2 \cdot [P_r + P_s] \cdot t\,(\mathrm{s})}{\pi \cdot 0.4^2\,\mathrm{cm}^2}$$

Die Leistungen der Teilstrahlen wurden so angepasst, dass in dem Medium bei den verwendeten Winkeln $\alpha_0$ und $\beta_0$, die gleiche Leistungsdichte erreicht wird.

Als Alternative I wurde auch ein dem in Abbildung 1 dargestellten Aufbau äquivalenter Test mit einem grünen Laser mit der Emissionswellenlänge $\lambda$ im Vakuum von 532 nm durchgeführt. Dabei beträgt $\alpha_0$ = -11.5° und $\beta_0$ = 33.5° und $P_r$ = 1.84 mW und $P_s$ = 2.16 mW.

Als Alternative II wurde auch ein dem in Abbildung 1 dargestellten Aufbau äquivalenter Test mit einem blauen Laser mit der Emissionswellenlänge $\lambda$ im Vakuum von 473 nm durchgeführt. Dabei beträgt $\alpha_0$ = -22.0° und $\beta_0$ = 42.0° und $P_r$ = 1.78 mW und $P_s$ = 2.22 mW.

In Beispielen wird jeweils der maximale Wert in $\Delta n$ berichtet, die verwendeten Dosen liegen zwischen 4 und 64 mJ/cm$^2$ pro Arm.

**Messung des Plateaumoduls $G_0$ der Photopolymeren mittels eines Oszillationsrheometers im Rahmen der vorliegenden Erfindung**

Die wie unten beschrieben zusammengesetzte, noch flüssige Formulierung wird in das Platte-Platte Messsystem eines Rheometers (Firma Anton Paar Physica Modell MCR 301 ausgerüstet mit dem Ofenmodel CTD 450 der auf 50°C vorgeheizt war) eingebracht. Dann wird die Aushärtung der Matrix der Photopolymerformulierung über die Zeit unter folgenden Bedingungen gemessen:

- Plattenabstand 250$\mu$m.
- Messmodus Oszillation bei einer konstanten Kreisfrequenz $\omega_0$ von 10 rad/s und einer geregelten Deformationsamplitude von 1%.
- Temperatur 50°C, Normalkraftregelung auf 0 Newton eingestellt
- Aufzeichnung des Speichermoduls G' über der Messzeit bis ein konstanter Wert $G_{max}$ von G' erreicht wurde oder für höchstens 3 Stunden.

Dieser Wert des Moduls wird als der zu bestimmende Plateaumodul $G_0$ aufgefasst. Beispiele für typische Messkurven finden sich in Figur 2.

Figur 2 zeigt den Verlauf der Aushärtung des Matrixnetzwerkes (links) und Prüfung auf Plateauverhalten (G' unabhängig von $\omega$) (rechts).

**Messung der Schichtdicke der Photopolymerschichten**

Die physikalische Schichtdicke wurde mit marktgängigen Weisslichtinterferometern ermittelt, wie z.B. das Gerät FTM-Lite NIR Schichtdickenmessgerät der Firma Ingenieursbüro Fuchs.

Die Bestimmung der Schichtdicke beruht im Prinzip auf Interferenzerscheinungen an dünnen Schichten. Dabei überlagern sich Lichtwellen, die an zwei Grenzflächen unterschiedlicher optischer Dichte reflektiert worden sind. Die ungestörte Überlagerung der reflektierten Teilstrahlen führt nun zur periodischen Aufhellung und Auslöschung im Spektrum eines weißen Kontinuumstrahlers (z.B. Halogenlampe). Diese Überlagerung nennt der Fachmann Interferenz. Diese Interferenzspektren werden gemessen und mathematisch ausgewertet.

**Einsatzstoffe**

**Verwendete Isocyanate (Komponenten A)**

Isocyanatkomponente 1 (Komponente a1) ist ein Versuchsprodukt der Bayer MaterialScience AG, Leverkusen, DE, Hexandiisocyanat-basiertes Polyisocyanat, Anteil an Iminooxadiazindion mindestens 30 %, NCO-Gehalt: 23,5 %

Isocyanatkomponente 2 (Komponente a2) ist ein Versuchsprodukt der Bayer MaterialScience AG, Leverkusen, Deutschland, aliphatisches Polyisocyanat auf Basis von Hexandiisocyanat, NCO-Gehalt ca. 20 %.

Isocyanatkomponente 3 (Komponente a3) ist ein Versuchsprodukt der Bayer MaterialScience AG, Leverkusen, Deutschland, Vollallophanat von Hexandiisocyanat auf Polypropylenglykol mit zahlenmittlerer Molmasse von ca. 280 g/mol, NCO-Gehalt: 16,5-17,3 %.

Isocyanatkomponente 4 (Komponente a4) ist ein Handelsprodukt der Bayer MaterialScience AG, Leverkusen, Deutschland, Mischung aus 29,4 mol-% Isocyanurats auf Basis von HDI mit 70,6 mol-% des Urethans aus Poly(ε-Caprolacton) der zahlenmittleren Molinasse 650 g/Mol mit HDI, NCO-Gehalt 10,5 - 11,5 %.

Isocyanatkomponente 5 (Komponente a5) ist ein Handelsprodukt der Bayer MaterialScience AG, Leverkusen, Deutschland, aliphatisches Biuret-Typ auf Basis Hexamethylendiisocyanat, NCO-Gehalt: 22,5 - 23,5 %.

**Verwendete isocyanatreaktiven Komponenten (Komponente b)**

Polyol 1 (Komponente b1) ist ein experimentelles Produkt der Bayer MaterialScience AG, Leverkusen, Deutschland, die Herstellung ist unten beschrieben.

Polyol 2 (Komponente b2) ist ein experimentelles Produkt der Bayer MaterialScience AG, Leverkusen, Deutschland, die Herstellung ist unten beschrieben.

Polyol 3 (Komponente b3) ist ein experimentelles Produkt der Bayer MaterialScience AG, Leverkusen, Deutschland, die Herstellung ist unten beschrieben.

Polyol 4 (Komponente b4) ist ein experimentelles Produkt der Bayer MaterialScience AG, Leverkusen, Deutschland, die Herstellung ist unten beschrieben.

**Verwendete strahlenhärtende Verbindung (Komponente B)**

Acrylat 1 (Komponente B1) ist ein experimentelles Produkt der Bayer MaterialScience AG, Leverkusen, Deutschland, die Herstellung ist unten beschrieben.

Acrylat 2 (Komponente B2) ist ein experimentelles Produkt der Bayer MaterialScience AG, Leverkusen, Deutschland, die Herstellung ist unten beschrieben.

Acrylat 3 (Komponente B3) ist ein experimentelles Produkt der Bayer MaterialScience AG, Leverkusen, Deutschland, die Herstellung ist unten beschrieben.

**Verwendete Komponenten der Photoinitiatorsysteme (Komponente C)**

Coinitiator 1 Tetrabutylammonium-tris(3-chlor-4-methylphenyl)(hexyl)borat, [1147315-11-4]) ist ein von der Ciba Inc., Basel, Schweiz, hergestelltes Versuchsprodukt.

Farbstoff 1 ist Neu Methylenblau (CAS 1934-16-3) und wurde von SIGMA-ALDRICH CHEMIE GmbH, Steinheim,

Deutschland bezogen.

Farbstoff 2 ist Safranin O (CAS 477-73-6) und wurde von SIGMA-ALDRICH CHEMIE GmbH, Steinheim, Deutschland bezogen..

Farbstoff 3 ist Ethylviolett (CAS 2390-59-2) und wurde in 80%-iger Reinheit von SIGMA-ALDRICH CHEMIE GmbH, Steinheim, Deutschland bezogen und so eingesetzt.

Farbstoff 4 ist Astrazon Orange G (CAS 3056-93-7) und wurde von SIGMA-ALDRICH CHEMIE GmbH, Steinheim, Deutschland bezogen.

**Verwendete nicht photopolymerisierbare Komponenten (Komponente D)**

Die nicht photopolymerisierbaren Komponenten (Komponente D1 bis D10) sind experimentelle Produkte der Bayer MaterialScience AG, Leverkusen, Deutschland, deren Herstellung ist unten beschrieben.

**Verwendeter Katalysator (Komponente E)**

Katalysator 1 (Komponente E1): Urethanisierungskatalysator, Dimethylbis[(1-oxoneodecl)oxy]stannan, Handelsprodukt der Momentive Perfonnance Chemicals, Wilton, CT, USA (als 10%ige Lösung in N-Ethylpyrrolidon eingesetzt).

**Verwendete Hilf- und Zusatzstoffe (Komponente E)**

BYK® 310: silikonbasiertes Oberflächenadditiv der Fa. BYK-Chemie GmbH, Wesel, Deutschland (Komponente G1) (Lösung 25%-ig in Xylol)

Desmorapid® Z (Dibutylzinn-dilaurat) ist ein Urethanisierungskatalysator und Handelsprodukt der Bayer MaterialScience AG, Leverkusen, Deutschland

DMC-Katalysator: Doppelmetallcyanid-Katalysator auf Basis Zinkhexacyanocobaltat (III), erhältlich nach dem in EP-A 700 949 beschriebenen Verfahren.

Irganox 1076 ist Octadecyl 3,5-di-(tert)-butyl-4-hydroxyhydrocinnamate (CAS 2082-79-3).

<u>**Herstellung der Komponenten**</u>

<u>Herstellung von Polvol 1 (Komponente b1):</u>

In einen mit Rührwerk ausgestatteten 201 - Reaktionskessel wurden 3,621 kg eines difunktionellen Polytetrahydrofuranpolyetherpolyols (Equivalentgewicht 500 g/Mol OH) eingewogen und 525 mg DMC-Katalysator zugegeben. Dann wurde unter Rühren bei ca. 70 U/min. auf 105 °C erhitzt. Durch dreimaliges Anlegen von Vakuum und Entspannen mit Stickstoff wurde Luft gegen Stickstoff ausgetauscht. Nach Erhöhung der Rührerdrehzahl auf 300 U/min. wurde für 54 Minuten bei laufender Vakuumpumpe und einem Druck von etwa 0,1 bar von unten Stickstoff durch die Mischung geleitet. Danach wurden mittels Stickstoff ein Druck von 0,2 bar eingestellt und 363 g Propylenoxid (PO) zum Start der Polymerisation eingeleitet. Hierbei stieg der Druck auf 2,42 bar. Nach 7 Minuten war der Druck wieder auf 0,34 bar abgefallen und es wurden über einen Zeitraum von 2h 29 min. weitere 11,379 kg PO bei 2,9 bar eindosiert. 47 Minuten nach Ende der PO-Dosierung wurde bei einem Restdruck von 1,9 bar Vakuum angelegt und vollständig entgast. Der Produkt wurde durch Zugabe von 7,5 g Irganox 1076 stabilisiert und als farblose, viskose Flüssigkeit erhalten (OH-Zahl: 27,6 mg KOH/g, Viskosität bei 25 °C: 1498 mPas).

<u>Herstellung von Polyol 2 (Komponente b2)::</u>

In einen mit Rührwerk ausgestatteten 20 1 - Reaktionskessel wurden 2475 g eines difunktionellen Polytetrahydrofuranpolyetherpolyols (Equivalentgewicht 325 g/Mol OH) eingewogen und 452,6 mg DMC-Katalysator zugegeben. Dann wurde unter Rühren bei ca. 70 U/min. auf 105 °C erhitzt. Durch dreimaliges Anlegen von Vakuum und Entspannen

mit Stickstoff wurde Luft gegen Stickstoff ausgetauscht. Nach Erhöhung der Rührerdrehzahl auf 300 U/min. wurde für 57 Minuten bei laufender Vakuumpumpe und einem Druck von etwa 0,1 bar von unten Stickstoff durch die Mischung geleitet. Danach wurden mittels Stickstoff ein Druck von 0,5 bar eingestellt und 100 g Ethylenoxid (EO) und 150 g PO parallel zum Start der Polymerisation eingeleitet. Hierbei stieg der Druck auf 2,07 bar. Nach 10 Minuten war der Druck wieder auf 0,68 bar abgefallen und es wurden über einen Zeitraum von 1h 53 min. weitere 5,116 kg EO und 7,558 kg PO als Gemisch bei 2,34 bar zugeleitet. 31 Minuten nach Ende der Epoxiddosierung wurde bei einem Restdruck von 2,16 bar Vakuum angelegt und vollständig entgast. Der Produkt wurde durch Zugabe von 7,5 g Irganox 1076 stabilisiert und als, leicht trübe, viskose Flüssigkeit erhalten (OH-Zahl 27,1 mg KOH/g, Viskosität bei 25 °C: 1636 mPas).

<u>Herstellung von Polyol 3 (Komponente b3):</u>

In einem 1 L Kolben wurden 0.18 g Zinnoktoat, 374.8 g ε-Caprolacton und 374.8 g eines difunktionellen Polytetrahydrofuranpolyetherpolyols (Equivalentgewicht 500 g/Mol OH) vorgelegt und auf 120 °C aufgeheizt und so lange auf dieser Temperatur gehalten, bis der Festgehalt (Anteil der nicht-flüchtigen Bestandteile) bei 99.5 Gew.-% oder darüber lag. Anschließend wurde abgekühlt und das Produkt als wachsiger Feststoff erhalten.

<u>Herstellung von Polyol 4 (Komponente b4):</u>

In einen mit Rührwerk ausgestatteten 201 - Reaktionskessel wurden 2465 g eines difunktionel-len Polytetrahydrofuranpolyetherpolyols (Equivalentgewicht 325 g/Mol OH) eingewogen und 450,5 mg DMC-Katalysator zugegeben. Dann wurde unter Rühren bei ca. 70 U/min. auf 105 °C erhitzt. Durch dreimaliges Anlegen von Vakuum und Entspannen mit Stickstoff wurde Luft gegen Stickstoff ausgetauscht. Nach Erhöhung der Rührerdrehzahl auf 300 U/min. wurde für 72 Minuten bei laufender Vakuumpumpe und einem Druck von etwa 0,1 bar von unten Stickstoff durch die Mischung geleitet. Danach wurden mittels Stickstoff ein Druck von 0,3 bar eingestellt und 242 g Propylenoxid (PO) zum Start der Polymerisation eingeleitet. Hierbei stieg der Druck auf 2,03 bar. Nach 8 Minuten war der Druck wieder auf 0,5 bar abgefallen und es wurden über einen Zeitraum von 2h 11 min. weitere 12,538 kg PO bei 2,34 bar eindosiert. 17 Minuten nach Ende der PO-Dosierung wurde bei einem Restdruck von 1,29 bar Vakuum angelegt und vollständig entgast. Der Produkt wurde durch Zugabe von 7,5 g Irganox 1076 stabilisiert und als farblose, viskose Flüssigkeit erhalten (OH-Zahl: 27,8 mg KOH/g, Viskosität bei 25 °C: 1165 mPas).

<u>Herstellung des Acrylates 1 (Komponente B1)</u> (Posphorthioyltris(oxy-4,1-phenyleniminocarbonyloxyethan-2,1-diyl)-triacrylat):

In einem 500 mL Rundkolben wurden 0.1 g 2,6-Di-tert.-butyl-4-methylphenol, 0.05 g Dibutylzinn-dilaurat (Desmorapid® Z, Bayer MaterialScience AG, Leverkusen, Deutschland) sowie und 213.07 g einer 27 %-igen Lösung von Tris(p-isocyanatophenyl)thiophosphat in Ethylacetat (Desmodur® RFE, Produkt der Bayer MaterialScience AG, Leverkusen, Deutschland) vorgelegt und auf 60 °C erwärmt. Anschließend wurden 42.37 g 2-Hydroxyethylacrylat zugetropft und die Mischung weiter auf 60 °C gehalten, bis der Isocyanatgehalt unter 0.1 % gesunken war. Danach wurde abgekühlt und im Vakuum das Ethylacetat vollständig entfernt. Das Produkt wurde als teilkristalliner Feststoff erhalten.

<u>Herstellung des Acrylates 2 (Komponente B2)</u> 2-({[3-(Methylsulfanyl)phenyl]carbamoyl}oxy)ethylprop-2-enoat):

In einem 100 mL Rundkolben wurden 0.02 g 2,6-Di-tert.-butyl-4-methylphenol, 0.01 g Desmorapid® Z, 11.7 g 3-(Methylthio)phenylisocyanat vorgelegt und vorgelegt und auf 60 °C erwärmt. Anschließend wurden 8.2 g 2-Hydroxyethylacrylat zugetropft und die Mischung weiter auf 60 °C gehalten, bis der Isocyanatgehalt unter 0.1 % gesunken war. Danach wurde abgekühlt. Das Produkt wurde als hellgelbe Flüssigkeit erhalten.

<u>Herstellung des Acrylates 3 (Komponente B3)</u> (Mischung aus (4-Methylbenzol-1,3-diyl)bis[carbamoyloxy-3-(biphenyl-2-yloxy)propan-2,1-diyl]bisacrylat und (4-Methylbenzol-1,3-diyl)bis[carbamoyloxy-3-(biphenyl-2-yloxy)propan-1,2-diyl] bisacrylat und analoger Iso-mere):

430,2g Denacol EX 142 (Nagase-Chemtex, Japan), 129,7g Acrylsäure, 1,18g Triphenylphosphin und 0,0056g 2,6-Di-t.-butyl-4-methylphenol wurden in einem Dreihalskolben mit Rückflusskühler und Rührwerk vorgelegt. Zudem wurde Luft langsam durchgeleitet und auf 60 °C temperiert. Anschließend wird für 24 Stunden bei 90 °C gerührt. Man erhielt eine klare Flüssigkeit mit OHZ=157,8 mg KOH/g. 21,3g dieses Zwischenprodukts und 5,2g eines Gemischs aus 2,4 und 2,6-Toluidendiisocyanat (Desmodur T80, Bayer MaterialScience AG, Leverkusen, Germany) wurden in einem Dreihalskolben mit Rückflusskühler und Rührwerk vorgelegt. Zudem wurde Luft langsam durchgeleitet und auf 60 °C temperiert. Nach anfänglicher Exothermie das Produkt für 24 Stunden bei 60 °C gerührt. Es wurde ein klares, farbloses,

gläsernes Produkt mit NCO = 0% erhalten.

Herstellung des Photoinitiatorsystems 1 (Komponente C1)

In einem Becherglas werden im Dunkeln oder unter geeigneter Beleuchtung 0,05 g Farbstoff 1, 0,05 g Farbstoff 2, 0,05 g Farbstoff 4, 1,50 g Coinitiator 1 in 3,50 g N-Ethylpyrolidon gelöst. Von dieser Lösung werden die entsprechenden Gewichtsprozente zur Erstellung der Beispielmedien verwendet.

Herstellung des Photoinitiatorsystems 2 (Komponente C2)

In einem Becherglas werden im Dunkeln oder unter geeigneter Beleuchtung 0,05 g Farbstoff 1, 0,05 g Farbstoff 3, 0,05 g Farbstoff 4, 1,50 g Coinitiator 1 in 3,50 g N-Ethylpyrolidon gelöst. Von dieser Lösung werden die entsprechenden Gewichtsprozente zur Erstellung der Beispielmedien verwendet.

Herstellung des Photoinitiatorsystems 3 (Komponente C3)

In einem Becherglas werden im Dunkeln oder unter geeigneter Beleuchtung 0,10 g Farbstoff 1, 1,00 Coinitiator 1 in 3,50 g N-Ethylpyrolidon gelöst. Von dieser Lösung werden die entsprechenden Gewichtsprozente zur Erstellung der Beispielmedien verwendet.

Herstellung der nicht photopolymerisierbaren Komponente (Komponente D1) (Bis(2,2,3,3,4,4,5,5,6,6,7,7-dodecafluorheptyl)-(2,2,4-trimethylhexan-1,6-diyl)biscarbamat):

In einem 50 mL Rundkolben wurden 0,02 g Dibutylzinn-dilaurat (Desmorapid Z, Bayer MaterialScience AG, Leverkusen, Deutschland) und 3,6 g 2,4,4-Trimethylhexane-1,6-diisocyanat (TMDI) vorgelegt und auf 60 °C erwärmt. Anschließend wurden 11,9 g 2,2,3,3,4,4,5,5,6,6,7,7-Dodecafluorheptan-1-ol zugetropft und die Mischung weiter auf 60 °C gehalten, bis der Isocyanatgehalt unter 0,1 % gesunken war. Danach wurde abgekühlt. Das Produkt wurde als farbloses Öl erhalten.

Die nachfolgend in Tabelle 1 beschriebenen Additive (Komponente D2 bis D10) wurden auf analoge Art wie für Additiv (Komponente D1) beschrieben in den angegebenen Zusammensetzungen hergestellt.

| Additiv | Name | Isocyanat und Menge | Alkohol und Menge | Katalysatorund Menge | Temp [°C] | Beschreibung |
|---|---|---|---|---|---|---|
| **D2** | 2,2,3,3,4,4,5,5,6,6,7,7,8,8,9,9-Hexadecafluornonyl-butylcarbamat | n-Butylisocyanat 186 g | 2,2,3,3,4,4,5,5,6,6,7,7,8, 8,9,9-Hexadecafluornonanol 813 g | Desmorapid Z 0,50 g | 60°C | farblose Flüssigkeit |
| **D3** | 2,2,2-Trifluorethyl-hexylcarbamat | n-Hexylisocyanat 55.9 g | Trifluorethanol 44.0 g | Desmorapid Z 0,05 g | 60°C | farblose Flüssigkeit |
| **D4** | Bis(1,1,1,3,3,3-hexafluorpropan-2-yl)-(2,2,4trimethylhexan-1,6-diyl) biscarbamat | 2,4,4-Trimethylhexane-1,6diisocyanat (TMDI) 50.0 g | Hexafluor-2-propanol 80.0g | Desmorapid Z 0,07 g | 60°C | farblose Flüssigkeit |
| **D5** | 2,2,3,3,4,4,5,5,6,6,7,7-Dodecafluor heptylbutylcarbamat | n-Butylisocyanat 3,44 g | 2,2,3,3,4,4,5,5,6,6,7,7-Dodecafluorheptan-1-ol 11,54 g | Desmorapid Z 0,02 g | 70°C | farblose Flüssigkeit |
| **D6** | 2,2,3,3,4,4,5,5,6,6,7,7-Dodecafluorheptylhexylcarbamat | n-Hexylisocyanat 4,15 g | 2,2,3,3,4,4,5,5,6,6,7,7Dodecafluorheptan-1-ol 10,84 g | Desmorapid Z 0,02 g | 70°C | farblose Flüssigkeit |
| **D7** | 2,2,3,3,4,4,5,5,6,6,7,7-Dodecafluorheptylpropan-2-ylcarbamat | i-Propylisocyanat 3,06 g | 2,2,3,3,4,4,5,5,6,6,7,7Dodecafluorheptan-1-ol 11,93g | Desmorapid Z 0,02 g | 70°C | farblose Flüssigkeit |
| **D8** | 2,2,3,3,4,4,4-Heptafluorbutyl-hexylcarbamat | n-Hexylisocyanat 5,82 g | 2,2,3,3,4,4,4-Heptafluorbutan-1-ol 9,16g g | Desmorapid Z 0,02 g | 70°C | farblose Flüssigkeit |
| **D9** | 2,2,3,3,4,4,5,5,6,6,7,7,8,8,9,9 Hexadecafluornonyl-hexylcarbamat | n-Hexylisocyanat 3,40 g | 2,2,3,3,4,4,5,5,6,6,7,7,8, 8,9,9-Hexadecafluornonan-1-ol 11,6g | Desmorapid Z 0,02 g | 70°C | farbloser Feststoff |
| **D10** | 2,2,3,3,4,4,5,5,6,6,7,7,8,8,9,9 Hexadecafluornonyl-cyclohexylcarbamat | Cyclohexylisocyanat 3,37 g | 2,2,3,3,4,4,5,5,6,6,7,7,8, 8,9,9-Hexadecafluornonan-1-ol 11,61 g | Desmorapid Z 0,02 g | 70°C | farbloser Feststoff |

## Herstellung der Proben und Beispielmedien

**Herstellung der Photopolymerformulierung (F) ohne Photoinitiator C) zur Bestimmung des Plateaumoduls $G_0$ der Photopolymeren.**

Zur Herstellung der Photopolymer-Formulierung zur Bestimmung des Moduls $G_0$ werden die verschiedenen Schreibmonomere (Komponenten B), sowie gegebenenfalls Additive (Teile der Komponente E) in der isocyanatreaktiven Komponenten b) (als Teil der Komponente A) gegebenenfalls bei 60 °C gelöst. Gegebenenfalls wird maximal 10 Minuten im Trockenschrank auf 60 °C erhitzt. Dann wird Isocyanat Komponente a) (anderer Teil der Komponente A) zugegeben und im Speedmixer 1 Minute gemischt. Im Folgenden wird eine Lösung der Komponente E1) in Butylacetat zugegeben und im Speedmixer erneut 1 Minute gemischt (weitere Teile der Komponente E). Die Konzentration der Komponente E1) in Butylacetat beträgt 10 Gewichtsprozent. Von dieser Lösung wurden die in Tabelle 2 beschriebenen Mengen eingesetzt.

Tabelle 2 listet die so hergestellten, untersuchten Beispiele der Photopolymerformulierungen ohne Photoinitiatorsystem C) zur Bestimmung des Plateaumoduls $G_0$ der Photopolymeren auf.

| Photopolymer Formulierung ohne Initiator | Vergleich mit Filmmedium | Isocyanat Komponente | Anteil (g) | isocyanatreaktive Komponente | Anteil (g) | NCO : OH | Photopolymerisierbares Monomer 1 | Anteil (Gew. %) | Photopolymerisierbares Monomer 2 | Anteil (Gew. %) | Nicht photopolymerisierbare Komponente | Anteil (Gew. %) | Katalysator in Lösung (Butylacetat) | Anteil (g) |
|---|---|---|---|---|---|---|---|---|---|---|---|---|---|---|
| F 1 | M4 | a1 | 0,366 | b1 | 4,121 | 1.02 : 1 | B1 | 15,0 | B2 | 15,0 | D1 | 25,0 | E1 | 0,0300 |
| F 2 | M5 | a2 | 0,573 | b4 | 5,414 | 1.02 : 1 | B1 | 20,0 | B2 | 20,0 | | | E1 | 0,0300 |
| F 3 | M9 | a1 | 0,706 | b3 | 3,781 | 1.02 : 1 | B1 | 15,0 | B2 | 15,0 | D1 | 25,0 | E1 | 0,0300 |
| F 4 | M13 | a3 | 0,496 | b4 | 3,991 | 1.02 : 1 | B1 | 15,0 | B2 | 15,0 | D2 | 25,0 | E1 | 0,0300 |
| F 5 | M14 | a3 | 0,534 | b2 | 3,950 | 1.02 : 1 | B1 | 15,0 | B2 | 15,0 | D1 | 25,0 | E1 | 0,0300 |
| F 6 | M15 | a3 | 0,534 | b2 | 3,950 | 1.02 : 1 | B1 | 15,0 | B2 | 15,0 | D2 | 25,0 | E1 | 0,0300 |
| F 7 | M16 | a4 | 0,757 | b2 | 3,730 | 1.02 : 1 | B1 | 15,0 | B2 | 15,0 | D1 | 25,0 | E1 | 0,0300 |
| F 8 | M17 | a4 | 0,757 | b2 | 3,730 | 1.02 : 1 | B1 | 25,0 | B2 | 15,0 | D1 | 15,0 | E1 | 0,0300 |
| F 9 | M18 | a5 | 0,370 | b2 | 4,117 | 1.02 : 1 | B1 | 25,0 | B2 | 15,0 | D1 | 15,0 | E1 | 0,0300 |
| F 10 | M23 | a1 | 0,706 | b3 | 3,781 | 1.02 : 1 | B3 | 15,0 | B2 | 15,0 | D1 | 25,0 | E1 | 0,0300 |
| F 11 | M24 | a3 | 0,534 | b2 | 3,950 | 1.02 : 1 | B3 | 15,0 | B2 | 15,0 | D1 | 25,0 | E1 | 0,0300 |

Tabelle 2: Photopolymerformulierungen die auf ihren Modul $G_0$ der Photopolymeren untersucht wurden.

Tabelle 3 listet die untersuchten Beispiele der Photopolymerformulienrungen, die für die kontinuierliche Herstellung von holografischen Folien eingesetzt werden, in ihrer Zusammensetzung auf.

Zur Herstellung der Photopolymerformulierung werden die Komponenten Polyol (Komponente b) schrittweise mit den photopolymerisierbaren Monomeren (Komponente B), mit den nicht polymerisierbaren Komponenten D, dann Fomrez® UL 28 (Komponente E1) und den oberflächenaktiven Additiven BYK® 310 (Komponente E2) versetzt und gemischt. Anschließend wird eine Lösung der Komponente C der Photopolymerlösung im Dunklen hinzugefügt und vermischt, so dass eine klare Lösung erhalten wurde. Gegebenenfalls kann die Formulierung für kurze Zeit bei 60°C

erwärmt werden, um die Löslichkeit der Einsatzstoffe zu unterstützen. Zuletzt wird bei 30°C die entsprechende Isocyanat Komponente a zugegeben und erneut gemischt. Die erhaltene, flüssige Masse wird dann mittels Rakel oder Schlitzdüse auf eine 36 μm dicke Polyethylenterephthalatfolie appliziert, und für 4,5 Minuten bei der entsprechenden Trocknungstemperatur (siehe Beispieltabelle 6) in einem Umlufttrockner getrocknet. Anschließend wird die Photopolymerschicht mit einer 40 μm dicken Polyethylenfolie abgedeckt und aufgewickelt.

Die gewünschte Zielschichtdicke der getrockneten Photopolymere liegen vorzugsweise zwischen 10 bis 20 μm. Die erzielten Schichtdicken für die hergestellten holografischen Folien sind der Tabelle 6 zu entnehmen.

Die Herstellgeschwindigkeiten liegen bevorzugt im Bereich von 0,2 m/min bis 300 m/min und besonders bevorzugt im Bereich vom 1,0 m/min bis 50 m/min.

Diese Art der holographischen Filme ist besonders geeignet, um deren Performance nach der im Abschnitt Messung der holographischen Eigenschaften DE und Δn der holographischen Medien mittels Zweistrahlinterferenz in Reflektionsanordnung beschriebenen Verfahren zu bestimmen.

| holographisches Medium | Isocyanat Komponente | Anteil (Gew. %) | isocyanatreaktive Komponente | Anteil (Gew. %) | NCO : OH | Photopolymerisierbares Monomer 1 | Anteil (Gew. %) | Photopolymerisierbares Monomer 2 | Anteil (Gew. %) | Nicht photopolymerisierbare Komponente | Anteil (Gew. %) | Photoinitiator | Anteil (Gew. %) | Hilfs- und Zusatzstoffe | Anteil (Gew. %) | Katalysator in Lösung | Anteil (Gew. %) |
|---|---|---|---|---|---|---|---|---|---|---|---|---|---|---|---|---|---|
| M1 | a1 | 6,30 | b3 | 33,80 | 1.02 : 1 | B1 | 20,0 | B2 | 20,0 | D3 | 15,0 | C3 | 4,59 | E2 | 0,30 | E1 | 0,010 |
| M2 | a1 | 6,30 | b3 | 33,80 | 1.02 : 1 | B1 | 20,0 | B2 | 20,0 | D7 | 15,0 | C3 | 4,59 | E2 | 0,30 | E1 | 0,010 |
| M3 | a1 | 6,30 | b3 | 33,80 | 1.02 : 1 | B1 | 20,0 | B2 | 20,0 | D8 | 15,0 | C3 | 4,59 | E2 | 0,30 | E1 | 0,010 |
| M4 | a1 | 3,23 | b1 | 36,07 | 1.02 : 1 | B1 | 15,0 | B2 | 15,0 | D1 | 25,0 | C2 | 5,30 | E2 | 0,30 | E1 | 0,100 |
| M5 | a2 | 5,27 | b4 | 49,23 | 1.02 : 1 | B1 | 20,0 | B2 | 20,0 | - | - | C1 | 5,15 | E2 | 0,30 | E1 | 0,050 |
| M6 | a1 | 6,30 | b3 | 33,80 | 1.02 : 1 | B1 | 20,0 | B2 | 20,0 | D2 | 15,0 | C3 | 4,59 | E2 | 0,30 | E1 | 0,010 |
| M7 | a3 | 4,40 | b2 | 34,85 | 1.02 : 1 | B1 | 15,0 | B2 | 15,0 | D8 | 25,0 | C2 | 5,40 | E2 | 0,30 | E1 | 0,050 |
| M8 | a1 | 6,16 | b3 | 33,23 | 1.02 : 1 | B1 | 15,0 | B2 | 15,0 | D2 | 25,0 | C1 | 5,30 | E2 | 0,30 | E1 | 0,010 |
| M9 | a1 | 6,16 | b3 | 33,23 | 1.02 : 1 | B1 | 15,0 | B2 | 15,0 | D1 | 25,0 | C1 | 5,30 | E2 | 0,30 | E1 | 0,010 |
| M10 | a1 | 6,30 | b3 | 33,80 | 1.02 : 1 | B1 | 20,0 | B2 | 20,0 | D2 | 15,0 | C3 | 4,59 | E2 | 0,30 | E1 | 0,010 |
| M11 | a1 | 6,30 | b3 | 33,80 | 1.02 : 1 | B1 | 20,0 | B2 | 20,0 | D6 | 15,0 | C3 | 4,59 | E2 | 0,30 | E1 | 0,010 |
| M12 | a1 | 6,30 | b3 | 33,80 | 1.02 : 1 | B1 | 20,0 | B2 | 20,0 | D10 | 15,0 | C3 | 4,59 | E2 | 0,30 | E1 | 0,010 |

| | | | | | | | | | | | | | | | | |
|---|---|---|---|---|---|---|---|---|---|---|---|---|---|---|---|---|
| M13 | a3 | 4,52 | b4 | 34,93 | 1.02 : 1 | B1 | 15,0 | B2 | 15,0 | D2 | 25,0 | C1 | 5,15 | E2 | 0,30 | E1 | 0,100 |
| M14 | a3 | 4,52 | b4 | 34,93 | 1.02 : 1 | B1 | 15,0 | B2 | 15,0 | D1 | 25,0 | C1 | 5,15 | E2 | 0,30 | E1 | 0,100 |
| M15 | a3 | 4,70 | b2 | 34,75 | 1.02 : 1 | B1 | 15,0 | B2 | 15,0 | D2 | 25,0 | C1 | 5,15 | E2 | 0,30 | E1 | 0,100 |
| M16 | a4 | 6,93 | b2 | 32,27 | 1.02 : 1 | B1 | 15,0 | B2 | 15,0 | D1 | 25,0 | C2 | 5,40 | E2 | 0,30 | E1 | 0,100 |
| M17 | a4 | 6,95 | b2 | 32,35 | 1.02 : 1 | B1 | 25,0 | B2 | 15,0 | D1 | 15,0 | C2 | 5,30 | E2 | 0,30 | E1 | 0,100 |
| M18 | a5 | 3,42 | b2 | 35,88 | 1.02 : 1 | B1 | 25,0 | B2 | 15,0 | D1 | 15,0 | C2 | 5,30 | E2 | 0,30 | E1 | 0,100 |
| M19 | a1 | 6,30 | b3 | 33,80 | 1.02 : 1 | B1 | 20,0 | B2 | 20,0 | D1 | 15,0 | C3 | 4,59 | E2 | 0,30 | E1 | 0,010 |
| M20 | a3 | 4,40 | b2 | 34,85 | 1.02 : 1 | B1 | 15,0 | B2 | 15,0 | D9 | 25,0 | C2 | 5,40 | E2 | 0,30 | E1 | 0,050 |
| M21 | a3 | 4,40 | b2 | 34,85 | 1.02 : 1 | B1 | 15,0 | B2 | 15,0 | D4 | 25,0 | C2 | 5,40 | E2 | 0,30 | E1 | 0,050 |
| M22 | a3 | 4,40 | b2 | 34,85 | 1.02 : 1 | B1 | 15,0 | B2 | 15,0 | D5 | 25,0 | C2 | 5,40 | E2 | 0,30 | E1 | 0,050 |
| M23 | a1 | 6,16 | b3 | 33,23 | 1.02 : 1 | B3 | 15,0 | B2 | 15,0 | D1 | 25,0 | C1 | 5,30 | E2 | 0,30 | E1 | 0,010 |
| M24 | a3 | 4,40 | b2 | 34,85 | 1.02 : 1 | B3 | 15,0 | B2 | 15,0 | D1 | 25,0 | C2 | 5,40 | E2 | 0,30 | E1 | 0,050 |
| M25 | a4 | 6,60 | b2 | 32,65 | 1.02 : 1 | B3 | 15,0 | B2 | 15,0 | D1 | 25,0 | C2 | 5,40 | E2 | 0,30 | E1 | 0,050 |

Tabelle 3: Holographische Medien die auf ihre Performance Δn geprüft wurden

## Ergebnisse aus Modul $G_0$ im Vergleich zur Wickelfähigkeit

Folgende Messwerte für $G_0$ (Pa) und der Qualität der Wickel fähigkeit wurden erhalten und sind in Tabelle 4 dargestellt:

| Photopolymer Formulierung ohne Initiator | Holographische Medium | Beispiel Typ | Gewichtsanteil (%) der Komponenten C an der Gesamtformulierung | $G_0$ in Pa | Wickelfähigkeit |
|---|---|---|---|---|---|
| F 1 | M4 | Vergleichsbeispiel 4 | 30,0 | 25.000 | - |
| F 2 | M5 | Vergleichsbeispiel 5 | 40,0 | 7.000 | -- |
| F 3 | M9 | Beispiel 2 | 30,0 | 489.000 | ++ |
| F 4 | M13 | Beispiel 6 | 30,0 | 31.000 | + |
| F 5 | M14 | Beispiel 7 | 30,0 | 90.000 | + |
| F 6 | M15 | Beispiel 8 | 30,0 | 85.000 | + |
| F 7 | M16 | Beispiel 9 | 30,0 | 52.000 | + |
| F 8 | M17 | Beispiel 10 | 40,0 | 49.000 | + |
| F 9 | M18 | Beispiel 11 | 40,0 | 34.000 | + |
| F 10 | M23 | Beispiel 16 | 30,0 | 242.000 | ++ |
| F 11 | M24 | Beispiel 17 | 30,0 | 44.000 | + |

Tabelle 4: Holographische Medien die auf Modul $G_0$ geprüft wurden

Es ergibt sich eine gute Block- und Wickelfähigkeit bei Werten von $G_0$ > 0.03 MPa. $G_0$ sollte bevorzugt > 0.05 MPa betragen und ganz besonders bevorzugt > 0.1 MPa.

Für die Bewertung der Wickelfähigkeit sind zwei Merkmale beim fertigen Produkt zu beurteilen. Zum Einen wird die Homogenität der Photopolymerschichtdicke visuell bewertet. Die Randbereiche des Photopolymers in Laufrichtung der Bahn sind hierbei besonders auffällig und gut zu beurteilen. Hier können zumeist leichte Unebenheiten in den Schichtdicken durch die Einfärbung des Photopolymers beobachtet werden, die durch eine Verschiebung des Materials bei Druckaufgabe durch die Schutzfolie entstehen können.

Als weiterer Aspekt wird die Klebrigkeit der Photopolymerschicht bewertet. Bei dieser Beurteilung wird die Schutzfolie von dem Photopolymer abgezogen. Während des Vorgangs kann über die aufgebrachte Kraft zum Abziehen und der Beobachtung der Grenzfläche zwischen Photopolymer und Schutzfolie die Klebrigkeit empirisch ermittelt werden. Hierbei ist die mögliche Zerstörung des Photopolymer beim Abziehen ein besonders starkes Anzeichen für eine sehr gute Haftung zwischen Photopolymer und Schutzfolie, das wiederum durch eine zu geringe Blockfestigkeit des Polymers hervorgerufen wird.

Im Folgenden werden die Bewertungen der einzelnen Qualitäten der Wickelfähigkeit erläutert:

++ keine Verschiebung der Schichtdicken, sehr lockeres Ablösen der Schutzfolie ohne Störungen im Film

\+ keine Verschiebung der Schichtdicken, leichtes Ablösen der Schutzfolie ohne Störungen im Film

\- leichte Schichtdickenvariation im Randbereich, schweres Abziehen der Schutzfolie ohne Zerstörung der Oberfläche

-- signifikante Schichtdickenvariationen im Randbereich, starkes "ausfransen" des Beschichtungsrandes, schweres Abziehen der Schutzfolie mit auftretenden Störungen im Photopolymer

**Ergebnisse TGA 95**

Folgende TGA 95 Messwerte wurden für die Schreibmonomere B) nach den Formeln II und III beschriebenen nicht photopolymerisierbaren Komponenten D) ermittelt:

| Komponente | Bezeichnung | TGA 95 in °C |
|---|---|---|
| B1 | Phosphorthioyltris(oxy-4,1-phenyleniminocarbonyloxyethan-2,1-diyl)-triacrylat | 177,2 |
| B2 | 2-({[3-(Methylsulfanyl)phenyl]carbamoyl}oxy)ethylprop-2-enoat | 190,3 |
| B3 | Mischung aus (4-Methylbenzol-1,3-diyl)bis[carbamoyloxy-3-(biphenyl-2-yloxy)propan-2,1-diyl]bisacrylat und (4-Methylbenzol-1,3-diyl)bis[carbamoyloxy-3-(biphenyl-2-yloxy)propan-1,2-diyl]bisacrylat und analoger Isomere | 239,5 |
| D1 | Bis(2,2,3,3,4,4,5,5,6,6,7,7-dodecafluorheptyl)-(2,2,4-trimethylhexan-1,6-diyl)biscarbamat | 189,5 |
| D2 | 2,2,3,3,4,4,5,5,6,6,7,7,8,8,9,9-Hexadecafluornonyl-butylcarbamat | 111,8 |

| | | |
|---|---|---|
| D3 | 2,2,2-Trifluorethyl-hexylcarbamat | 72,5 |
| D4 | Bis(1,1,1,3,3,3-hexafluorpropan-2-yl)-(2,2,4-trimethylhexan-1,6-diyl)biscarbamat | 139,1 |
| D5 | 2,2,3,3,4,4,5,5,6,6,7,7-Dodecafluorheptyl-butylcarbamat | 112,6 |
| D6 | 2,2,3,3,4,4,5,5,6,6,7,7-Dodecafluorheptyl-hexylcarbamat | 117,6 |
| D7 | 2,2,3,3,4,4,5,5,6,6,7,7-Dodecafluorheptyl-propan-2-ylcarbamat | 93,3 |
| D8 | 2,2,3,3,4,4,4-Heptafluorbutyl-hexylcarbamat | 82,3 |
| D9 | 2,2,3,3,4,4,5,5,6,6,7,7,8,8,9,9-Hexadecafluornonyl-hexylcarbamat | 125,9 |
| D10 | 2,2,3,3,4,4,5,5,6,6,7,7,8,8,9,9-Hexadecafluornonyl-cyclohexylcarbamat | 130,8 |

Tabelle 5: Auflistung der Komponenten B und D die auf TGA 95 geprüft wurden

**Ergebnisse Δn**

Folgende Messwerte der in Tabelle 3 beschriebenen holografischen Medien sind in Tabelle 6 dargestellt:

| holographisches Medium | Beispiel Typ | Trocknung (Zeit min / Temperatur °C) | Trockenschichtdicke (µm) | Δn (633nm) | E (mJ/cm²) | Δn (532nm) | E (mJ/cm²) | Δn (473nm) | E (mJ/cm²) |
|---|---|---|---|---|---|---|---|---|---|
| M1 | Vergleichsbeispiel 1 | 4,5 / 80 | 12 - 14 | 0.012 | 9 - 36 | | | | |
| M2 | Vergleichsbeispiel 2 | 4,5 / 80 | 15 - 17 | 0.011 | 9 - 36 | | | | |
| M3 | Vergleichsbeispiel 3 | 4,5 / 80 | 15 - 16 | 0.011 | 9 - 36 | | | | |
| M4 | Vergleichsbeispiel 4 | 4,5 / 80 | 8 - 12 | | | 0.033 | 16 - 128 | | |
| M5 | Vergleichsbeispiel 5 | 4,5 / 80 | 29 - 32 | 0.026 | 9 - 36 | 0.026 | 16 - 128 | | |
| M6 | Vergleichsbeispiel 6 | 4,5 / 100 | 16 - 18 | 0.010 | 9 - 36 | | | | |
| M7 | Vergleichsbeispiel 7 | 4,5 / 80 | 15 - 17 | 0.013 | 9 - 36 | 0.014 | 16 - 128 | | |
| M8 | Beispiel 1 | 4,5 / 80 | 12 - 14 | 0.037 | 9 - 36 | 0.034 | 16 - 128 | | |
| M9 | Beispiel 2 | 4,5 / 80 | 15 - 16 | 0.034 | 9 - 36 | 0.032 | 16 - 128 | 0.032 | 16-128 |
| M10 | Beispiel 3 | 4,5 / 80 | 15 - 16 | 0.038 | 9 - 36 | | | | |
| M11 | Beispiel 4 | 4,5 / 80 | 16 - 17 | 0.027 | 9 - 36 | | | | |

| | | | | | | | | | |
|---|---|---|---|---|---|---|---|---|---|
| M12 | Beispiel 5 | 4,5 / 80 | 16 - 17 | 0.029 | 9 - 36 | | | | |
| M13 | Beispiel 6 | 4,5 / 80 | 13 - 14 | | | 0.027 | 16 - 128 | | |
| M14 | Beispiel 7 | 4,5 / 80 | 11 - 12 | | | 0.031 | 16 - 128 | | |
| M15 | Beispiel 8 | 4,5 / 80 | 13 - 16 | 0.033 | 9 - 36 | 0.028 | 16 - 128 | | |
| M16 | Beispiel 9 | 4,5 / 80 | 15 - 17 | 0.036 | 9 - 36 | | | | |
| M17 | Beispiel 10 | 4,5 / 80 | 14 - 15 | 0.036 | 9 - 36 | | | | |
| M18 | Beispiel 11 | 4,5 / 80 | 13 - 14 | 0.035 | 9 - 36 | | | | |
| M19 | Beispiel 12 | 4,5 / 80 | 11 - 13 | 0.031 | 9 - 36 | | | | |
| M20 | Beispiel 13 | 4,5 / 80 | 15 - 17 | 0.037 | 9 - 36 | 0.035 | 16 - 128 | | |
| M21 | Beispiel 14 | 4,5 / 80 | 15 - 17 | 0.028 | 9 - 36 | 0.033 | 16 - 128 | | |
| M22 | Beispiel 15 | 4,5 / 80 | 15 - 17 | 0.029 | 9 - 36 | 0.030 | 16 - 128 | | |
| M23 | Beispiel 16 | 4,5 / 80 | 12 - 13 | 0.037 | 9 - 36 | 0.033 | 16 - 128 | 0.032 | 16-128 |
| M24 | Beispiel 17 | 4,5 / 80 | 16 - 17 | 0.034 | 9 - 36 | | | | |
| M25 | Beispiel 18 | 4,5 / 80 | 14 - 15 | 0.033 | 9 - 36 | | | | |

Tabelle 6: Holografische Messergebnisse $\Delta n$ in Abhängigkeit diverser Zusammensetzungen und Trocknungsbedingungen.

Insbesondere die Beispiele M8 bis M25 zeigen im Folienaufbau hohe $\Delta n$ Werte.

Versuch M4 und M5 zeigen aufgrund einer geeigneten Rezeptzusammensetzung ebenfalls eine gute holografische Performance. Jedoch sind die Wickelfähigkeit und die weitere Weiterverarbeitbarkeit durch ein zu geringes Plateaumodul $G_0$ von < 0,030 MPa nicht gegeben.

## Patentansprüche

**1.** Verfahren zur Herstellung von holographischen Filmen, bei dem

i) eine Photopolymer-Formulierung umfassend als Komponenten

A) Matrixpolymere
B) Schreibmonomere
C) Photoinitiatorsystem
D) optional eine nicht photopolymerisierbare Komponente
E) und gegebenenfalls Katalysatoren, Radikalstabilisatoren, Lösungsmittel, Additive sowie andere Hilfs- und / oder Zusatzstoffe

bereit gestellt,
ii) die Photopolymer-Formulierung flächig als Film auf eine Trägerfolie aufgebracht und
iii) die Photopolymer-Formulierung auf der Trägerfolie bei einer Temperatur 60 < T < 120 °C getrocknet wird,

wobei als Komponenten für die Photopolymer-Formulierung nur Verbindungen ausgewählt werden, deren TGA 95 Werte > 100°C sind und mindestens 30 °C über der Temperatur T liegen und eine Photopolymer-Fonnulierung mit einen Plateaumodul von ≥ 0.030 MPa verwendet wird.

**2.** Verfahren nach Anspruch 1, **dadurch gekennzeichnet, dass** die Photopolymer-Formulierung bei einer Temperatur 70 < T < 100 °C getrocknet wird.

**3.** Verfahren nach einem der Ansprüche 1 bis 2, **dadurch gekennzeichnet, dass** die TGA 95 Werte der einzelnen Komponenten bestimmt werden, indem eine Menge der Probe der jeweiligen Komponente von ca. 10 mg in ein Aluminiumpfännchen mit einem Volumen von 70 µl eingewogen, das Aluminiumpfännchen einen Ofen einer Thennowaage, bevorzugt einer Thermowaage TG50 der Firma Mettler-Toledo, eingebracht und bei einer konstanten Aufheizrate des Ofens von 20 K/min der Massenverlust der Probe im offenen Aluminiumpfännchen gemessen wird, wobei die Starttemperatur 30 °C und die Endtemperatur 600 °C des Ofens betragen, der Ofen während der Bestimmung mit einem Stickstoffstrom einer Stärke von 200 ml/min durchgespült und als TGA 95 Wert der jeweiligen Komponente die Temperatur ermittelt wird, bei der ein Massenverlust der Probe von 5 Gew.-%, bezogen auf die ursprünglich eingewogene Menge der Probe, eingetreten ist.

**4.** Verfahren nach einem der Ansprüche 1 bis 3, **dadurch gekennzeichnet, dass** eine Photopolymer-Formulierung mit einen Plateaumodul von ≥ 0.03 MPa und ≤ 1 MPa, bevorzugt von ≥ 0.05 MPa und ≤ 1 MPa, besonders bevorzugt von ≥ 0.1 MPa und ≤ 1 MPa und insbesondere bevorzugt von ≥ 0.1 MPa und ≤ 0.6 MPa verwendet wird.

**5.** Verfahren nach einem der Ansprüche 1 bis 4, **dadurch gekennzeichnet, dass** nach dem Trocknen im Schritt iii) auf den Film eine Kaschierfolie aufgebracht wird.

**6.** Verfahren nach Anspruch 5, **dadurch gekennzeichnet, dass** der Film zusammen mit der Kaschierfolie aufgerollt wird.

**7.** Verfahren nach einem der Ansprüche 1 bis 6, **dadurch gekennzeichnet, dass** die Matrixpolymere Polyurethane sind.

**8.** Verfahren nach Anspruch 7, **dadurch gekennzeichnet, dass** die Polyurethane erhältlich sind durch Umsetzung von einer Isocyanatkomponente a) und einer Isocyanatreaktiven Komponente b).

**9.** Verfahren nach einem der Ansprüche 1 bis 8, **dadurch gekennzeichnet, dass** die Schreibmonomere Acrylate und / oder Meth(acrylate) sind.

**10.** Verfahren nach einem der Ansprüche 1 bis 9, **dadurch gekennzeichnet, dass** als Schreibmonomere eine Kombination aus einem monofunktionellen und einem multi-funktionellen Schreibmonomer verwendet wird.

**11.** Verfahren nach Anspruch 10, **dadurch gekennzeichnet, dass** das monofunktionelle Schreibmonomer die allgemeine Formel (II)

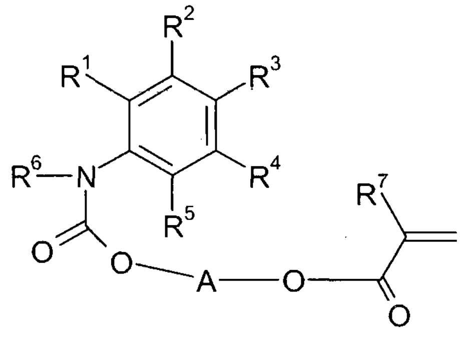

(II)

hat, in der R1, R2, R3, R4, R5 jeweils unabhängig voneinander ein Wasserstoff- oder Halogenatom oder eine C1-C6-Alkyl-, Trifluormethyl-, C1-C6-Alkylthio-, C1-C6-Alkylseleno-, C1-C6-Alkyltelluro- oder Nitro-Gruppe sind, mit der Maßgabe dass wenigstens ein Substituent der Gruppe R1, R2, R3, R4, R5 nicht Wasserstoff ist, R6, R7 jeweils für sich Wasserstoff oder eine C1-C6-Alkylgruppe sind und A ein gesättigter oder ungesättigter oder linearer oder verzweigter C1-C6-Alkyl-Rest oder ein Polyethylenoxid-Rest oder ein Polypropylenoxid-Rest mit jeweils 2-6 Widerholungseinheiten in der Polymerkette ist; und das monofunktionelle Schreibmonomer bevorzugt eine Glastemperatur $T_G$ < 0°C und bevorzugt einen Brechungsindex >1.50 bei 405 nm aufweist.

**12.** Verfahren nach einem der Ansprüche 11 oder 12, **dadurch gekennzeichnet, dass** das multifunktionelle Schreibmonomer die allgemeine Formel (III)

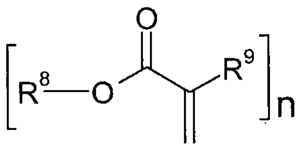

(III)

hat, in der n≥2 und n≤4 ist und $R^8$, $R^9$ Wasserstoff und / oder unabhängig voneinander lineare, verzweigte, cyclische oder heterocyclische unsubstituierte oder gegebenenfalls auch mit Heteroatomen substituierte organische Reste sind und das multifunktionelle Schreibmonomer bevorzugt einen Brechungsindex >1.50 bei 405 nm aufweist.

**13.** Verfahren nach einem der Ansprüche 1 bis 12, **dadurch gekennzeichnet, dass** die Photopolymer-Formulierung als Zusatzstoff Urethane als Weichmacher enthält, wobei bevorzugt Urethane der allgemeinen Formel (V)

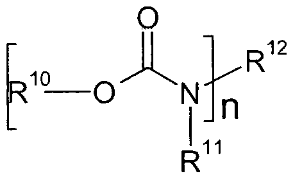

(V)

verwendet werden, bei denen n≥1 und n≤8 ist und $R^{10}$, $R^{11}$, $R^{12}$ Wasserstoff und / oder unabhängig voneinander lineare, verzweigte, cyclische oder heterocyclische unsubstituierte oder gegebenenfalls auch mit Heteroatomen substituierte organische Reste sind, wobei bevorzugt mindestens einer der Reste $R^{10}$, $R^{11}$, $R^{12}$ mit wenigstens einem Fluoratom substituiert ist und besonders bevorzugt $R^{10}$ ein organischer Rest mit mindestens einem Fluoratom ist.

**14.** Verfahren nach einem der Ansprüche 8 bis 13, **dadurch gekennzeichnet, dass** dabei die nachfolgenden Prozessschritte durchlaufen werden:

I. Fördern und Dosieren zum einen der Komponente a) gegebenenfalls gemischt mit einer oder mehrerer der Komponenten B), C), D) und E) sowie zum anderen separat dazu der Komponente b) gegebenenfalls gemischt mit einer oder mehrerer der Komponenten B), C) D) und E)
II. Entgasen der gemäß I) geförderten, dosierten und gegebenenfalls vorvennischten Ströme
III. Filtrieren der nach II) erhaltenen Mischung
IV. Homogenisieren der nach III) erhaltenen Mischung
V. Abwicklung und Vorbehandlung des Trägermaterials
VI. Beschichten des Trägermaterials mit der nach Schritt IV) erhaltenen Mischung
VII. Trocknung des nach VI) beschichteten Films
VIII. Kaschieren des nach VII) erhaltenen beschichteten Films
IX. Aufwicklung des nach VIII) erhaltenen kaschierten Films

**15.** Verfahren nach einem der Ansprüche 1 bis 14, **dadurch gekennzeichnet, dass** die Photopolymer-Formulierung durch einen Druckprozess auf die Trägerfolie aufgebracht wird.

**16.** Holographischer Film, erhältlich nach einem Verfahren gemäß einem der Ansprüche 1 bis 15.

**17.** Verwendung des holographischen Films gemäß Anspruch 16 als optische Elemente, Bilder oder zur Bilddarstellung oder -projektion.

## Claims

**1.** Process for producing holographic films in which

i)a photopolymer formulation comprising, as components,

A) matrix polymers
B) writing monomers
C) photoinitiator system
D) optionally a non-photopolymerizable component
E) and optionally catalysts, free radical stabilizers, solvents, additives and other auxiliaries and/or additives

is provided,
ii) the photopolymer formulation is applied extensively as a film to a substrate film and
iii) the photopolymer formulation is dried on the substrate film at a temperature of 60 < T < 120°C,

components chosen for the photopolymer formulation being only compounds whose TGA 95 values are > 100°C and are at least 30°C above the temperature T and a photopolymer formulation having a plateau modulus of ≥ 0.030 MPa being used.

**2.** Process according to Claim 1, **characterized in that** the photopolymer formulation is dried at a temperature of 70 < T < 100°C.

**3.** Process according to either of Claims 1 and 2, **characterized in that** the TGA 95 values of the individual components are determined by weighing an amount of about 10 mg of the sample of the respective component into a small aluminium pan having a volume of 70 μl, introducing the small aluminium pan an oven of a thermobalance, preferably a TG50 thermobalance from Mettler-Toledo, and measuring the loss of mass of the sample in the open small aluminium pan at a constant oven heating rate of 20 K/min, the start temperature of the oven being 30°C and the end temperature 600°C, the oven being flushed with a 200 ml/min nitrogen stream during the determination and the temperature at which a loss of mass of the sample of 5% by weight, based on the originally weighed in amount of the sample, has occurred being determined as the TGA 95 value of the respective component.

**4.** Process according to any of Claims 1 to 3, **characterized in that** a photopolymer formulation having a plateau modulus of ≥ 0.03 MPa and ≤ 1 MPa, preferably of ≥ 0.05 MPa and ≤ 1 MPa, particularly preferably of ≥ 0.1 MPa and ≤ 1 MPa and especially preferably of ≥ 0.1 MPa and ≤ 0.6 MPa is used.

**5.** Process according to any of Claims 1 to 4, **characterized in that** a laminating film is applied to the film after the drying in step iii).

**6.** Process according to Claim 5, **characterized in that** the film is rolled up together with the laminating film.

**7.** Process according to any of Claims 1 to 6, **characterized in that** the matrix polymers are polyurethanes.

**8.** Process according to Claim 7, **characterized in that** the polyurethanes are obtainable by reacting an isocyanate component a) and an isocyanate-reactive component b).

**9.** Process according to any of Claims 1 to 8, **characterized in that** the writing monomers are acrylates and/or meth (acrylates).

**10.** Process according to any of Claims 1 to 9, **characterized in that** a combination of a monofunctional and a polyfunctional writing monomer is used as writing monomers.

**11.** Process according to Claim 10, **characterized in that** the monofunctional writing monomer has the general formula (II)

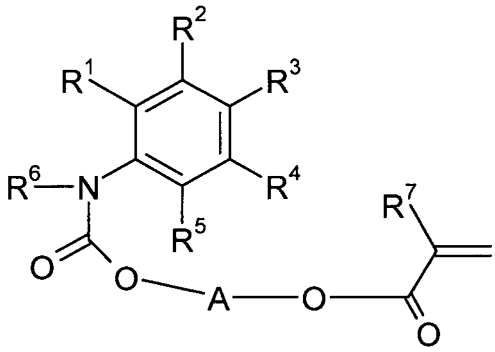

(II)

in which R1, R2, R3, R4, R5, in each case independently of one another, are a hydrogen or halogen atom or a C1-C6-alkyl, trifluoromethyl, C1-C6-alkylthio, C1-C6-alkylseleno, C1-C6-alkyltelluro or nitro group, with the proviso that at least one substituent of the group R1, R2, R3, R4, R5 is not hydrogen, R6, R7, in each case by themselves, are hydrogen or a C1-C6-alkyl group and A is a saturated or unsaturated or linear or branched C1-C6-alkyl radical or a polyethylene oxide radical or a polypropylene oxide radical having in each case 2-6 repeating units in the polymer chain, and the monofunctional writing monomer preferably has a glass transition temperature $T_G$ of < 0°C and preferably a refractive index of > 1.50 at 405 nm.

**12.** Process according to either of Claims 11 and 12, **characterized in that** the polyfunctional writing monomer has the general formula (III)

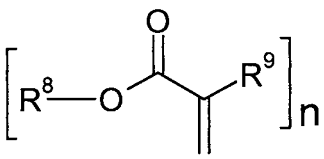

(III)

in which n is ≥ 2 and n is ≤ 4 and $R^8$, $R^9$ are hydrogen and/or, independently of one another, linear, branched, cyclic or heterocyclic organic radicals which are unsubstituted or optionally also substituted by heteroatoms and the polyfunctional writing monomer preferably has a refractive index of > 1.50 at 405 nm.

**13.** Process according to any of Claims 1 to 12, **characterized in that** the photopolymer formulation contains, as an additive, urethanes as plasticizers, urethanes of the general formula (V)

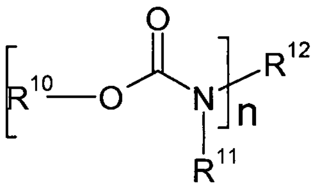

(V)

preferably being used, in which n is ≥ 1 and n is ≤ 8 and $R^{10}$, $R^{11}$, $R^{12}$ are hydrogen and/or, independently of one another, linear, branched, cyclic or heterocyclic organic radicals which are unsubstituted or optionally also substituted by heteroatoms, preferably at least one of the radicals $R^{10}$, $R^{11}$, $R^{12}$ being substituted by at least one fluorine atom and particularly preferably $R^{10}$ being an organic radical having at least one fluorine atom.

**14.** Process according to any of Claims 8 to 13, **characterized in that** the following process steps are carried out:

I. transport and metering firstly of the component a), optionally mixed with one or more of the components B), C), D) and E), and secondly, separately therefrom, of the component b), optionally mixed with one or more of the components B), C), D) and E)

II. devolatilization of the streams transported, metered and optionally premixed according to I)
III.filtration of the mixture obtained according to II)
IV. homogenization of the mixture obtained according to III)
V.unwinding and pre-treatment of the substrate material
VI.coating of the substrate material with the mixture obtained according to step IV)
VII. drying of the film coated according to VI)
VIII. lamination of the coated film obtained according to VII)
IX.winding up of the laminated film obtained according to VIII)

**15.** Process according to any of Claims 1 to 14, **characterized in that** the photopolymer formulation is applied to the substrate film by a printing process.

**16.** Holographic film obtainable by a process according to any of Claims 1 to 15.

**17.** Use of the holographic film according to Claim 16 as optical elements, as images or for image representation or projection.

**Revendications**

**1.** Procédé pour la fabrication de films holographiques, dans lequel

i) on prépare une composition de photopolymère comprenant comme composants

A) des polymères de matrice
B) des monomères d'écriture
C) un système photoamorceur
D) en option un composant non photo-polymérisable
E) et éventuellement des catalyseurs, stabilisants de radicaux, solvants, additifs ainsi que d'autres adjuvants et/ou additifs,

ii) on applique la composition de photopolymère sous forme de film sur toute la surface sur une pellicule de support et
iii) on sèche à une température 60 < T < 120 °C la composition de photopolymère sur la pellicule de support,

en ne choisissant comme composants pour la composition de photopolymère que des composés dont les valeurs thermogravimétriques TGA 95 sont > 100 °C et se situent à au moins 30 °C au-dessus de la température T et en utilisant une composition de photopolymère ayant un module de plateau de ≥ 0,030 MPa.

**2.** Procédé selon la revendication 1, **caractérisé en ce qu'**on sèche la composition de photopolymère à une température 70 < T < 100 °C.

**3.** Procédé selon la revendication 1 ou 2, **caractérisé en ce qu'**on détermine les valeurs TGA 95 des composants individuels en pesant une quantité d'environ 10 mg de l'échantillon du composant respectif dans une capsule en aluminium ayant un volume de 70 μl, on place la capsule en aluminium dans un four d'une thermobalance, de préférence d'une thermobalance TG50 de la société Mettler-Toledo, et on mesure à une vitesse constante de chauffage du four de 20 K/min la perte de masse de l'échantillon dans la capsule en aluminium ouverte, la température initiale étant de 30 °C et la température finale du four étant de 600 °C, pendant la détermination on fait passer dans le four un courant d'azote à un débit de 200 ml/min et on détermine en tant que valeur TGA 95 du composant respectif la température à laquelle est apparue une perte de masse de l'échantillon de 5 % en poids, par rapport à la quantité initialement pesée de l'échantillon.

**4.** Procédé selon l'une quelconque des revendications 1 à 3, **caractérisé en ce qu'**on utilise une composition de photopolymère ayant un module de plateau de ≥ 0,03 MPa et ≤ 1 MPa, de préférence de ≥ 0,05 MPa et ≤ 1 MPa, de façon particulièrement préférée de ≥ 0,1 MPa et ≤ 1 MPa et de façon plus particulièrement préférée de ≥ 0,1 MPa et ≤ 0,6 MPa.

**5.** Procédé selon l'une quelconque des revendications 1 à 4, **caractérisé en ce qu'**après le séchage dans l'étape iii)

on applique une pellicule de doublage sur le film.

6. Procédé selon la revendication 5, **caractérisé en ce qu'**on enroule le film conjointement avec la pellicule de doublage.

7. Procédé selon l'une quelconque des revendications 1 à 6, **caractérisé en ce que** les polymères de matrice sont des polyuréthanes.

8. Procédé selon la revendication 7, **caractérisé en ce que** les polyuréthanes peuvent être obtenus par mise en réaction d'un composant isocyanate a) et d'un composant réactif avec un isocyanate b).

9. Procédé selon l'une quelconque des revendications 1 à 8, **caractérisé en ce que** les monomères d'écriture sont des acrylates et/ou méthacrylates.

10. Procédé selon l'une quelconque des revendications 1 à 9, **caractérisé en ce qu'**on utilise comme monomères d'écriture une association d'un monomère d'écriture monofonctionnel et d'un monomère d'écriture polyfonctionnel.

11. Procédé selon la revendication 10, **caractérisé en ce que** le monomère d'écriture monofonctionnel présente la formule générale (II)

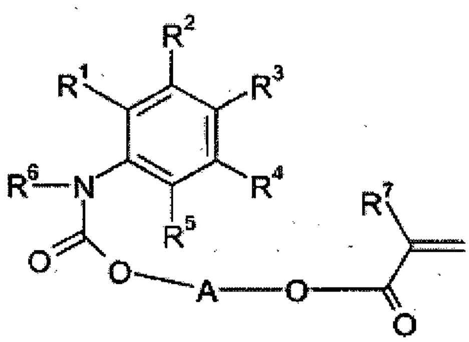
(II)

dans laquelle R1, R2, R3, R4, R5 représentent chacun indépendamment les uns des autres un atome d'hydrogène ou d'halogène ou un groupe alkyle en $C_1$-$C_6$, trifluorométhyle, alkyl($C_1$-$C_6$) thio, alkyl($C_1$-$C_6$)séléno, alkyl($C_1$-$C_6$) telluro ou nitro, étant entendu qu'au moins un substituant du groupe R1, R2, R3, R4, R5 n'est pas un atome d'hydrogène, R6, R7 représentent chacun en soi un atome d'hydrogène ou un groupe alkyle en $C_1$-$C_6$ et A est un radical alkyle en $C_1$-$C_6$ saturé ou insaturé ou linéaire ou ramifié ou un radical polyoxyéthylène ou un radical polyoxypropylène comportant chacun 2-6 motifs répétitifs dans la chaîne polymère ; et le monomère d'écriture monofonctionnel présente de préférence une température de transition vitreuse $T_G < 0$ °C et de préférence un indice de réfraction > 1,50 à 405 nm.

12. Procédé selon la revendication 11 ou 12, **caractérisé en ce que** le monomère d'écriture polyfonctionnel présente la formule générale (III)

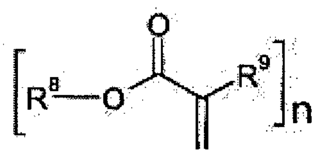
(III)

dans laquelle $n \geq 2$ et $n \leq 4$ et $R^8$, $R^9$ représentent un atome d'hydrogène et/ou indépendamment l'un de l'autre des radicaux organiques linéaires, ramifiés, cycliques ou hétérocycliques, non substitués ou éventuellement également substitués par des hétéroatomes et le monomère d'écriture polyfonctionnel présente de préférence un indice de réfraction > 1,50 à 405 nm.

13. Procédé selon l'une quelconque des revendications 1 à 12, **caractérisé en ce que** la composition de photopolymère contient comme additif des uréthanes en tant que plastifiant, de préférence étant utilisés des uréthanes de formule

générale (V)

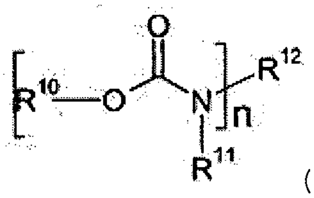

(V)

dans lesquels n ≥ 1 et n ≤ 8 et $R^{10}$, $R^{11}$, $R^{12}$ représentent un atome d'hydrogène et/ou chacun indépendamment des radicaux organiques linéaires, ramifiés, cycliques ou hétérocycliques, non substitués ou éventuellement également substitués par des hétéroatomes, de préférence au moins l'un des radicaux $R^{10}$, $R^{11}$, $R^{12}$ étant substitués par au moins un atome de fluor et de façon particulièrement préférée $R^{10}$ étant un radical organique comportant au moins un atome de fluor.

**14.** Procédé selon l'une quelconque des revendications 8 à 13, **caractérisé en ce que** dans ce procédé on effectue les étapes de processus suivantes :

I. transport et introduction par addition dosée d'une part du composant a) éventuellement en mélange avec un ou plusieurs des composants B), C), D) et E) ainsi que d'autre part, séparément de cela, du composant b) éventuellement en mélange avec un ou plusieurs des composants B), C), D) et E)
II. dégazage des courants transportés, introduits par addition dosée et éventuellement prémélangés selon I)
III. filtration du mélange obtenu selon II)
IV. homogénéisation du mélange obtenu selon III)
V. déroulement et prétraitement du matériau de support
VI. enduction du matériau de support avec le mélange obtenu selon l'étape IV)
VII. séchage du film revêtu selon VI)
VIII. contrecollage du film revêtu, obtenu selon VII)
IX. enroulement du film contrecollé, obtenu selon VIII) .

**15.** Procédé selon l'une quelconque des revendications 1 à 14, **caractérisé en ce qu'**on applique par un processus d'impression la composition de photopolymère sur la pellicule de support.

**16.** Film holographique, pouvant être obtenu conformément à un procédé selon l'une quelconque des revendications 1 à 15.

**17.** Utilisation du film holographique selon la revendication 16 en tant qu'éléments optiques, images ou pour la représentation ou la projection d'images.

**Figur 1:**

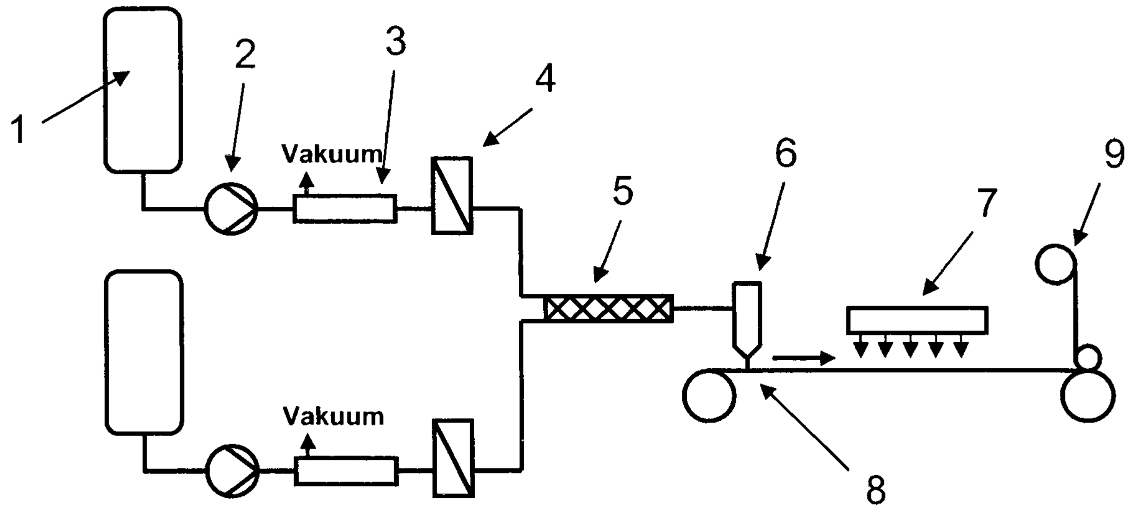


**Figur 2:**

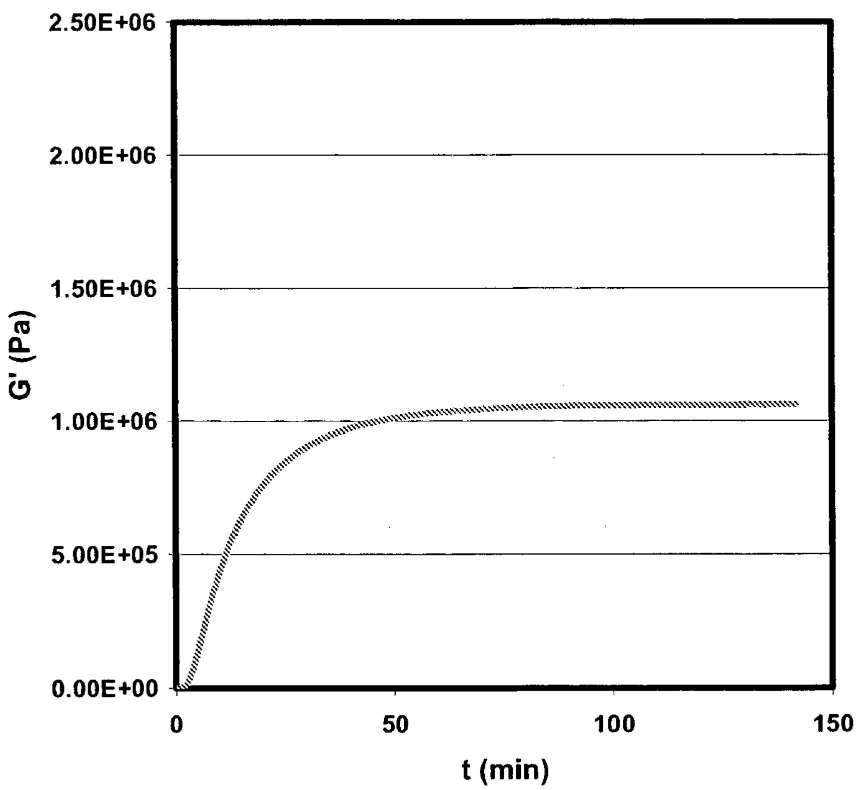

Figur 3:

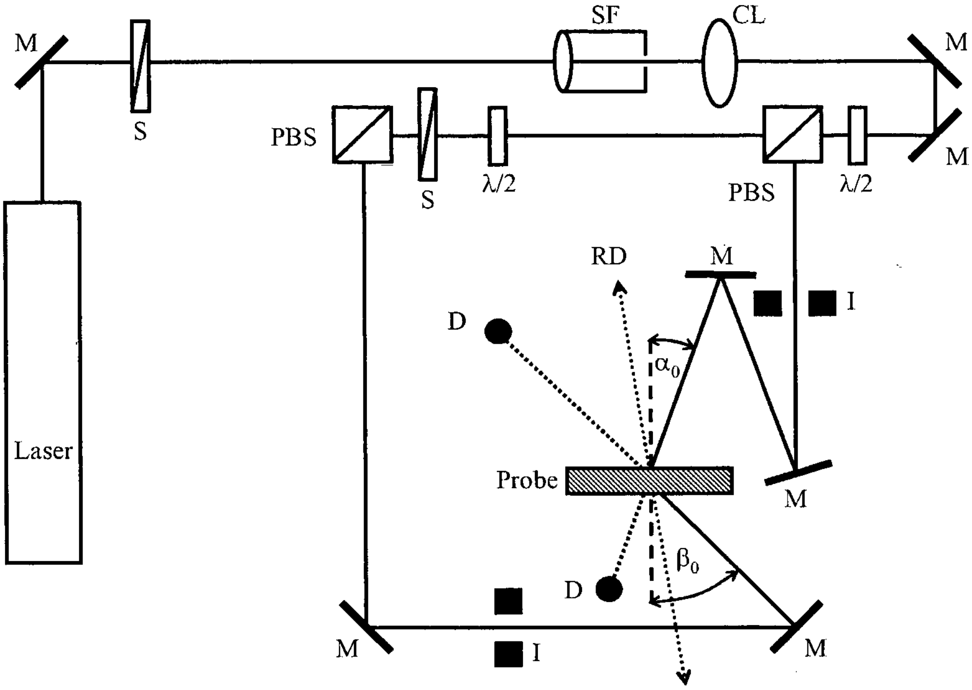


Figur 4:

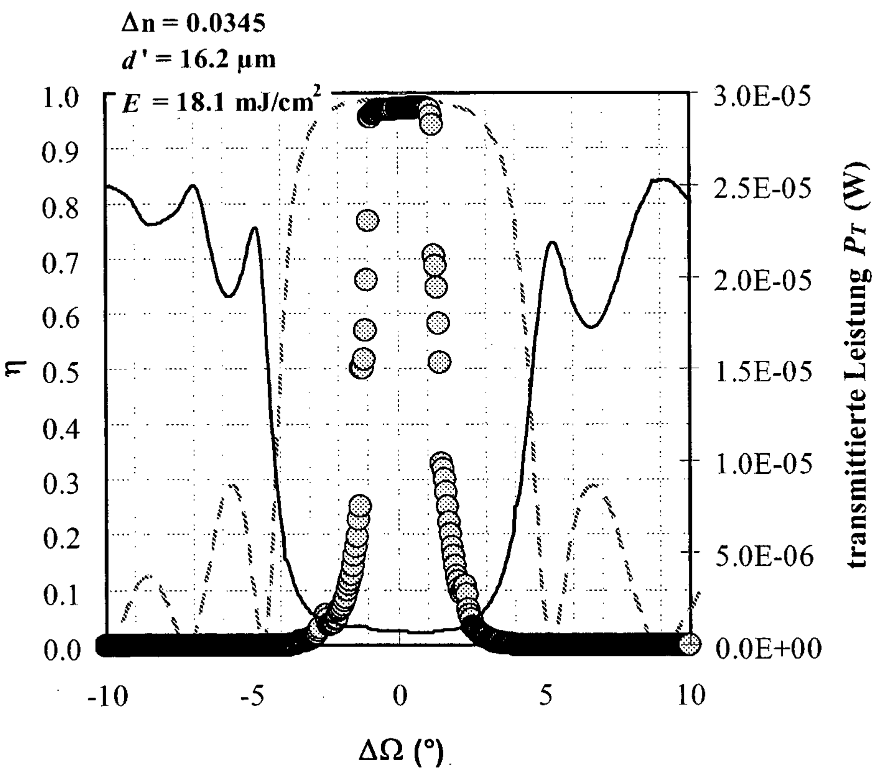

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2008125199 A1
- EP 09001952 A
- WO 03014178 A
- US 5470813 A
- EP 700949 A
- EP 743093 A
- EP 761708 A
- WO 9740086 A
- WO 9816310 A
- WO 0047649 A
- WO 2008125229 A1
- EP 09009651 A
- EP 0223587 A


### In der Beschreibung aufgeführte Nicht-Patentliteratur


- **P. HARIBARAN.** Optical Holography. Cambridge University Press, 1996
- **CUNNINGHAM et al.** *RadTech'98 North America UV/EB Conference Proceedings,* 19. April 1998
- **KUTAL et al.** *Macromolecules,* 1991, vol. 24, 6872
- **YAMAGUCHI et al.** *Macromolecules,* 2000, vol. 33, 1152
- **NECKERS et al.** *Macromolecules,* 2000, vol. 33, 7761
- **LI et al.** *Polymeric Materials Science and Engineering,* 2001, vol. 84, 139
- **DEKTAR et al.** *J. Org. Chem.,* 1990, vol. 55, 639
- *J. Org. Chem.,* 1991, vol. 56, 1838
- **CRIVELLO et al.** *Macromolecules,* 2000, vol. 33, 825
- **GU et al.** *Am. Chem. Soc. Polymer Preprints,* 2000, vol. 41 (2), 1266
- **HUA et al.** *Macromolecules,* 2001, vol. 34, 2488-2494
- Chemistry & Technology of UV & EB Formulations For Coatings, Inks & Paints. SITA Tech-nology, 1991, vol. 3, 61-328
- **HOUBEN-WEYL.** Methoden der organischen Chemie. Georg Thieme Verlag, 1961, vol. XIV-1, 433ff
- **KOGELNIK.** *The Bell System Technical Journal,* November 1969, vol. 48 (9), 2909, 2947